# EUROPÄISCHE PATENTSCHRIFT

(11) **EP 3 626 655 B1**
(45) Veröffentlichungstag und Bekanntmachung des Hinweises auf die Patenterteilung: **07.05.2025**
(21) Anmeldenummer: 18196273.9
(22) Anmeldetag: 24.09.2018
(51) Int. Cl.: B65G 47/88, B65C 1/04, B65G 15/14, B65G 47/244, B65B 35/24, B65C 9/02, B65G 47/22

(54) **VERFAHREN ZUM AUSRICHTEN VON QUADERFÖRMIGEN VERPACKUNGSSCHACHTELN**
METHOD FOR ALIGNING QUADRATIC PACKING BOXES
PROCÉDÉ D'ALIGNEMENT DE BOÎTES D'EMBALLAGE PARALLÉLÉPIPÉDIQUES

(43) Veröffentlichungstag der Anmeldung: 25.03.2020
(73) Patentinhaber: Uhlmann Pac-Systeme GmbH & Co. KG, 88471 Laupheim (DE)
(72) Erfinder: Stahl, Joachim, 89233 Neu-Ulm (DE); Knoll, Michael, 89480 Achstetten (DE)
(74) Vertreter: Wächter, Jochen

(56) Entgegenhaltungen:
- WO-A1-95/03220
- DE-A1- 4 040 261
- GB-A- 934 866
- JP-A- 2000 255 517
- JP-A- 2006 290 385
- JP-U- S6 024 706
- US-A1- 2003 024 217
- US-B1- 6 878 222

## Beschreibung

Die vorliegende Erfindung betrifft ein Verfahren zum Ausrichten von quaderförmigen Verpackungsschachteln, insbesondere von Faltschachteln, die pharmazeutische Produkte enthalten.

Verpackungsschachteln werden häufig als Umverpackung für in kleineren Verpackungseinheiten verpackte pharmazeutische Produkte verwendet. Zum Beispiel wird eine Mehrzahl Blisterpackungen, von denen jede eine oder mehrere Tabletten enthält, zusammen mit einer Packungsbeilage in einer Verpackungsschachtel verpackt. Eine hierfür geeignete Verpackungslinie umfasst eine Blistermaschine zum Herstellen und Befüllen von Blisterpackungen, eine Kartoniermaschine, die die Blisterpackungen in Verpackungsschachteln verpackt, sowie weitere Folgemaschinen, z.B. eine Etikettiermaschine, eine Serialisierungsmaschine, einen Drucker, eine Prägevorrichtung oder eine Kombination aus diesen.

Die Verpackungsschachteln durchlaufen dann eine Lieferkette vom Hersteller der pharmazeutischen Produkte bis zum Endabnehmer. Um die Verpackungen während dieser Lieferkette individuell nachverfolgen zu können und vor Manipulation des Verpackungsinhalts zu schützen, werden in den Etikettier- und/oder Serialisierungsmaschinen in der Regel verschiedene Kennzeichnungen auf die Verpackungsschachteln aufgebracht. Ein Beispiel bilden Klebeetiketten, die Inhalts- oder Verabreichungsangaben aufweisen. Es können auch individuelle Kennzeichen, wie z. B. Strichcodes oder QR-Codes auf die Verpackungsschachteln aufgebracht, z. B. gelasert oder aufgedruckt werden. Individuelle Kennzeichen ermöglichen das Nachverfolgen der einzelnen Verpackungsschachteln vom Arzneimittelhersteller, über die gesamte Vertriebskette bis hin zum Endabnehmer. Dadurch wird die Rückverfolgbarkeit der Arzneimittel und somit die Qualität und Herkunft der Arzneimittel gesichert.

Neben der Rückverfolgbarkeit spielen sogenannte Sicherheitsverpackungen eine große Rolle. Solche Sicherheitsverpackungen weisen ein oder mehrere Sicherheitsmerkmale auf, die beim erstmaligen Öffnen der Verpackungsschachtel irreversibel beschädigt werden. Es ist daher stets offensichtlich, ob sich die Verpackungsschachtel im Originalzustand befindet oder bereits geöffnet wurde. Dadurch soll vermieden werden, dass bereits befüllte und gekennzeichnete Verpackungsschachteln manipuliert werden, z. B. indem sie geöffnet werden und die darin enthaltenen Arzneimittel durch andere Arzneimittel ersetzt werden. Derartige Sicherheitsmerkmale können integral mit der Verpackungsschachtel ausgebildet sein oder z. B. durch Klebeetiketten gebildet werden. Geeignete Klebeetiketten erstrecken sich von einer ersten Seitenfläche der Verpackungsschachtel über eine Kante derselben hinweg auf eine zweite Seitenfläche der Verpackungsschachtel, wobei eine der beiden Seitenflächen durch eine Boden- oder Deckellasche der Verpackungsschachtel gebildet ist. Das Klebeetikett haftet so fest an der Verpackungsschachtel, dass es nicht ohne Beschädigung der Verpackungsschachtel oder des Klebeetiketts entfernt werden kann. Wird die Boden- oder Deckellasche der Verpackungsschachtel geöffnet, um an die darin enthaltenen Arzneimittel zu gelangen, wird zwangsläufig das Klebeetikett oder die Verpackungsschachtel beschädigt.

Insbesondere bei dieser Art von Etiketten, die sich über zumindest eine Kante der Verpackungsschachtel hinweg erstrecken, aber auch bei allen anderen auf eine Verpackungsschachtel aufzubringenden Kennzeichnungen ist es erforderlich, dass die Verpackungsschachteln zum Zeitpunkt des Aufbringens der Kennzeichnung möglichst korrekt ausgerichtet sind. Nur wenn die Seitenflächen von quaderförmigen Verpackungsschachteln senkrecht zueinander stehen, ist gewährleistet, dass die Kennzeichnungen über eine Vielzahl von Verpackungsschachteln hinweg an der gewünschten Stelle aufgebracht werden und insbesondere dann, wenn sie sich über die Kanten der Verpackungsschachtel hinweg erstrecken, keine Falten bilden oder bereits beim Aufbringen beschädigt werden.

Es hat sich jedoch herausgestellt, dass aufgrund der Anforderungen an die Förderung der Produkte in den einzelnen Maschinen der Verpackungslinie, insbesondere an der Schnittstelle zwischen einer Kartoniermaschine und einer Etikettier- und/oder Serialisierungsmaschine ein formstabiler Transport bzw. eine formstabile Übergabe der Verpackungsschachteln kaum möglich ist.

Die US 6 878 222 B1 offenbart z.B. eine Vorrichtung, die mittels eines Stempels Kennzeichnungen auf Verpackungen aufbringt. Eine Fördereinrichtung umfasst zwei Förderbänder, die an zwei gegenüberliegenden Seiten der Verpackung angreifen und diese entlang eines Transportpfads fördert. Im Bereich des Stempels ist zumindest ein Anschlag angeordnet, der in den Transportpfad bewegbar ist, um die Verpackung in einer vorbestimmten Position bezüglich des Stempels zu halten. Hierzu ist jedoch eine aufwendige separate Ansteuerung der Förderbänder erforderlich.

Die JP 2000 255517 A beschreibt eine Verschließeinrichtung, die dazu eingerichtet ist, ein Band auf die Oberseite oder Unterseite eines Kartons zu kleben, während der Karton von einem Förderband gehalten wird. Dabei hält ein Förderbandsteuergerät den Antrieb für eine bestimmte Zeit an, je nachdem wie steif der Karton ist oder wie groß dessen Verformung ist. Wenn ein angebrachter Endschalter den Karton erkennt, wird eine Seite der Förderbänder, die im Voraus festgelegt wurde, gestoppt.

Die GB 934 866 A offenbart eine Vorrichtung zum Verschließen von Verpackungen, die zwei Deckellaschen aufweisen, durch Aufbringen eines Klebebandstreifens entlang des Längsspalts zwischen diesen Laschen. Die Verpackungen sollen dieser Vorrichtung in gleichmäßigen Abständen zugeführt werden. Hierzu sind in einem Einlaufbereich Haken vorgesehen, die die Verpackungen zurückhalten und in entsprechenden Abständen freigeben.

Die JP 2006 290385 A offenbart ein Verfahren zum Ausrichten von quaderförmigen Verpackungsschachteln umfassend:
Fördern von Verpackungsschachteln entlang eines Transportpfads in einer Förderrichtung mittels einer Fördereinrichtung, wobei die Fördereinrichtung eine erste Fördereinheit und eine der ersten Fördereinheit gegenüberliegende zweite Fördereinheit umfasst, die den Transportpfad definieren, wobei die erste Fördereinheit und die zweite Fördereinheit jeweils mindestens einen Riemen umfassen, die Verpackungsschachteln zwischen sich aufnehmen und gemeinsam fördern; und
Ausrichten jeweils einer Verpackungsschachtel der geförderten Verpackungsschachteln, die einen Verzug derart aufweist, dass zumindest ein Teil der Seitenflächen der Verpackungsschachtel nicht senkrecht zueinander ausgerichtet ist, mittels mindestens eines Anschlagelements, das im Bereich der Fördereinrichtung angeordnet ist, wobei das Ausrichten einer Verpackungsschachtel umfasst:
   Anordnen des mindestens einen Anschlagelements in einer ersten Position, in der das mindestens eine Anschlagelement in den Transportpfad hineinragt;
   Fördern der Verpackungsschachtel gegen das mindestens eine Anschlagelement, wobei sich die Fördereinrichtung relativ zu dem mindestens einen Anschlagelement weiter in Förderrichtung bewegt und die Verpackungsschachtel dadurch gegen das mindestens eine Anschlagelement zwingt, bis alle an das mindestens eine Anschlagelement angrenzenden Abschnitte der Verpackungsschachtel an dem mindestens einen Anschlagelement anliegen und die Seitenflächen der Verpackungsschachtel senkrecht zueinander ausgerichtet sind, wobei mindestens eine Anschlagstelle des mindestens einen Anschlagelements, an der die Verpackungsschachtel zum Anliegen kommt, eine Ebene definiert, die senkrecht zur Förderrichtung ausgerichtet ist.
   Es ist eine Aufgabe der vorliegenden Erfindung, ein Verfahren bereitzustellen, das ein Ausrichten der Verpackungsschachteln auch bei hohen Transportgeschwindigkeiten ermöglicht. Diese Aufgabe wird durch die Merkmale des Anspruchs 1 gelöst. Bevorzugte Ausführungsformen sind Gegenstand der abhängigen Unteransprüche.

Ein erfindungsgemäßes Verfahren zum Ausrichten von quaderförmigen Verpackungsschachteln umfasst:
Fördern von Verpackungsschachteln entlang eines Transportpfads in einer Förderrichtung mittels einer Fördereinrichtung, wobei die Fördereinrichtung eine erste Fördereinheit und eine der ersten Fördereinheit gegenüberliegende zweite Fördereinheit umfasst, die den Transportpfad definieren, wobei die erste Fördereinheit und die zweite Fördereinheit jeweils mindestens einen Riemen umfassen, die Verpackungsschachteln zwischen sich aufnehmen und gemeinsam fördern; und

Ausrichten jeweils einer Verpackungsschachtel der geförderten Verpackungsschachteln, die einen Verzug derart aufweist, dass zumindest ein Teil der Seitenflächen der Verpackungsschachtel nicht senkrecht zueinander ausgerichtet ist, mittels mindestens eines Anschlagelements, das im Bereich der Fördereinrichtung angeordnet ist, wobei das Ausrichten einer Verpackungsschachtel umfasst:
Anordnen des mindestens einen Anschlagelements in einer ersten Position, in der das mindestens eine Anschlagelement in den Transportpfad hineinragt, wobei das mindestens eine Anschlagelement in der ersten Position stationär angeordnet ist;
Fördern der Verpackungsschachtel gegen das mindestens eine Anschlagelement, wobei sich die Fördereinrichtung relativ zu dem mindestens einen Anschlagelement weiter in Förderrichtung bewegt und die Verpackungsschachtel dadurch gegen das mindestens eine Anschlagelement zwingt, bis alle an das mindestens eine Anschlagelement angrenzenden Abschnitte der Verpackungsschachtel an dem mindestens einen Anschlagelement anliegen und die Seitenflächen der Verpackungsschachtel senkrecht zueinander ausgerichtet sind, wobei mindestens eine Anschlagstelle des mindestens einen Anschlagelements, an der die Verpackungsschachtel zum Anliegen kommt, eine Ebene definiert, die senkrecht zur Förderrichtung ausgerichtet ist;
Bewegen des mindestens einen Anschlagelements aus der ersten Position in eine zweite Position, wenn alle an das mindestens eine Anschlagelement angrenzenden Abschnitte der Verpackungsschachtel an dem mindestens einen Anschlagelement anliegen, wobei das mindestens eine Anschlagelement in der zweiten Position nicht in den Transportpfad hineinragt, und dadurch Freigeben der ausgerichteten Verpackungsschachtel zum weiteren Transport in Förderrichtung.

Der Schritt des Ausrichtens jeweils einer Verpackungsschachtel der geförderten Verpackungsschachteln wird vorzugsweise bei jeder geförderten Verpackungsschachtel durchgeführt und entsprechend wiederholt.

Auf diese Weise wird ein Verfahren bereitgestellt, durch das Verpackungsschachteln besonders schnell, exakt und zuverlässig während ihres Transports ausgerichtet werden können. Noch während die auszurichtende Verpackungsschachtel herangefördert wird, wird das mindestens eine Anschlagelement in der ersten Position angeordnet. Sobald die Verpackungsschachtel mit einem voraneilenden Abschnitt auf das mindestens eine Anschlagelement trifft, blockiert das mindestens eine Anschlagelement die Verpackungsschachtel zumindest in diesem Abschnitt. Hierzu ist das mindestens eine Anschlagelement in der ersten Position stationär angeordnet. Die Fördereinrichtung bewegt sich weiter in Förderrichtung. Aufgrund des Reibschlusses zwischen der Fördereinrichtung und der jeweiligen Verpackungsschachtel zwingt die Fördereinrichtung die Verpackungsschachtel dabei stets weiter in Richtung des mindestens einen Anschlagelements. Das mindestens eine Anschlagelement ist derart eingerichtet, dass die auszurichtende Verpackungsschachtel exakt ausgerichtet ist, sobald alle an das mindestens eine Anschlagelement angrenzenden Abschnitte der Verpackungsschachtel an dem mindestens einen Anschlagelement anliegen. Da der Verzug der Verpackungsschachteln in der Regel gering ist und die Fördergeschwindigkeit der Verpackungsschachteln durch die Fördereinrichtung verhältnismäßig hoch ist, können die Verpackungsschachteln in Sekundenbruchteilen ausgerichtet werden. Sobald die Verpackungsschachtel korrekt ausgerichtet ist, bewegt sich das mindestens eine Anschlagelement aus der ersten Position in eine zweite Position, in der das mindestens eine Anschlagelement nicht in den Transportpfad hineinragt. Dadurch wird die ausgerichtete Verpackungsschachtel freigegeben und durch die Fördereinrichtung weiter in Förderrichtung gefördert.

Die Verpackungsschachteln sind bevorzugt als Faltschachteln ausgebildet. Die erste und die zweite Fördereinheit sind bevorzugt als erster und zweiter Riemenantrieb, besonders bevorzugt als Oberläufer und Unterläufer ausgebildet. In jedem Fall weisen die erste und die zweite Fördereinheit jeweils einen Abschnitt auf, in dem sich Riemen der ersten und der zweiten Fördereinheit quer zur Förderrichtung gegenüberliegen, parallel zueinander verlaufen und den Transportpfad definieren. Hierzu können die erste und die zweite Fördereinheit horizontal nebeneinander angeordnet sein, wobei sie an Seitenflächen der Verpackungsschachteln angreifen. Die erste und die zweite Fördereinheit können aber auch vertikal übereinander angeordnet sein, wie dies bei Oberläufer und Unterläufer der Fall ist, und an einer Oberseite und einer Unterseite der Verpackungsschachteln angreifen.

Sich einander gegenüberliegende Fördereinheiten eignen sich besonders gut zum Fördern der Verpackungsschachteln bei hohen Geschwindigkeiten, da sie die Verpackungsschachteln sicher zwischen den parallel verlaufenden Riemenabschnitten aufnehmen und eine Verschiebung der Verpackungsschachteln relativ zu Ober- und Unterläufer vermieden wird. Zudem bringen sie beidseitig eine Kraft auf die Verpackungsschachteln auf, die die Verpackungsschachteln zum einen gleichmäßig fördern und zum anderen beim Auftreffen auf das mindestens eine Anschlagelement korrekt ausrichten.

Besonders bevorzugt erfolgt das Ausrichten jeweils einer Verpackungsschachtel der geförderten Verpackungsschachteln mittels einer Mehrzahl von Anschlagelementen und das Bewegen der Mehrzahl von Anschlagelementen aus der ersten Position in die zweite Position erfolgt gleichzeitig. Wird eine Verpackungsschachtel herangefördert, bei der einzelne Seitenflächen schräg zueinander ausgerichtet sind, tritt der maximale Verzug der Verpackungsschachtel in den Randabschnitten der voraneilenden Seitenfläche der Verpackungsschachtel auf. Eine möglichst exakte Ausrichtung der gesamten Verpackungsschachtel wird zudem dadurch zuverlässig erreicht, dass sie möglichst über ihre Fläche verteilt an definierten Anschlagstellen ausgerichtet wird.

Dies kann dadurch erreicht werden, dass eine Mehrzahl von Anschlagelementen vorgesehen wird, von denen jedes eine Anschlagstelle für die auszurichtende Verpackungsschachtel definiert. Die Mehrzahl von Anschlagelementen kann vorzugsweise verhältnismäßig klein ausgebildet sein und dadurch eine geringe Masse aufweisen. Vorzugsweise ist die Mehrzahl von Anschlagelementen derart angeordnet, dass die Anschlagelemente in der ersten Position an Randabschnitte der voraneilenden Seitenfläche der auszurichtenden Verpackungsschachtel angrenzen und entlang der Randabschnitte verteilt sind.

Es ist weiterhin besonders bevorzugt, dass Anschlagstellen der Anschlagelemente, an denen die Verpackungsschachtel zum Anliegen kommt, eine Ebene definieren, die senkrecht zur Förderrichtung ausgerichtet ist. Wie viele Anschlagelemente zum Definieren der Ebene erforderlich sind, hängt von der Gestalt der Anschlagstellen ab. Ist das mindestens eine Anschlagelement derart ausgebildet, dass die Verpackungsschachtel flächig an einem Anschlagelement anliegt, die Kontaktstelle also eine Kontaktfläche ist, definiert diese Kontaktfläche die Ebene und ein Anschlagelement ist ausreichend.

Sind die Anschlagstellen klein, z.B. Anschlagpunkte oder Anschlaglinien, sind vorzugsweise drei Anschlagelemente vorgesehen, die die Ebene definieren und von denen sich zumindest zwei quer zur Förderrichtung gegenüberliegen. Vorzugsweise sind zwei Anschlagelemente im Bereich eines Randabschnitts der voraneilenden Seitenfläche der auszurichtenden Verpackungsschachtel angeordnet und zumindest ein Anschlagelement ist im jeweils gegenüberliegenden Randabschnitt der voraneilenden Seitenfläche der Verpackungsschachtel angeordnet.

Liegt die auszurichtende Verpackungsschachtel mit allen an ein Anschlagelement angrenzenden Abschnitten an dem jeweiligen Anschlagelement an, erstreckt sich die voraneilende Seitenfläche der Verpackungsschachtel in der durch die Anschlagstelle bzw. Anschlagstellen definierten Ebene. Die Seitenflächen der Verpackungsschachtel sind dann senkrecht zueinander ausgerichtet.

In einer bevorzugten Ausführungsform sind mindestens ein erstes Anschlagelement und ein zweites Anschlagelement der Mehrzahl von Anschlagelementen auf einer Seite des Transportpfads angeordnet und mindestens ein drittes Anschlagelement und ein viertes Anschlagelement der Mehrzahl von Anschlagelementen sind auf einer dem ersten und dem zweiten Anschlagelement quer zur Förderrichtung gegenüberliegenden Seite des Transportpfads angeordnet. Dadurch wird erreicht, dass die voraneilende Seitenfläche und somit die gesamte Verpackungsschachtel sowohl in einer ersten Querrichtung senkrecht zur Förderrichtung als auch in einer zweiten Querrichtung senkrecht zur Förderrichtung und zur ersten Querrichtung ausgerichtet wird. Vorzugsweise sind dabei das erste und das zweite Anschlagelement oberhalb des Transportpfads angeordnet und das dritte und das vierte Anschlagelement unterhalb des Transportpfads angeordnet. Das erste und das zweite Anschlagelement können aber auch rechts des Transportpfads angeordnet sein und das dritte und das vierte Anschlagelement sind dann links des Transportpfads angeordnet.

Die Anschlagstellen der vier Anschlagelemente, an denen die Verpackungsschachtel zum Anliegen kommt, spannen die Ebene zum Ausrichten der Verpackungsschachtel auf. Zugleich können jeweils das erste und das zweite Anschlagelement bzw. das dritte und das vierte Anschlagelement quer zur Förderrichtung verteilt sein und so auch bei weniger stabilen Verpackungsschachteln ein exaktes Ausrichten ohne Verformung der Verpackungsschachteln ermöglichen.

Vorzugsweise erfolgt das Bewegen des mindestens einen Anschlagelements zwischen der ersten und der zweiten Position durch Schwenken des mindestens einen Anschlagelements um eine Schwenkachse zwischen der ersten und der zweiten Position. Durch das Schwenken kann das mindestens eine Anschlagelement besonders schnell zwischen der ersten und der zweiten Position bewegt werden. Zudem hat das Schwenken den Vorteil, dass das mindestens eine Anschlagelement in Förderrichtung der Verpackungsschachteln von der ersten in die zweite Position geschwenkt werden kann. Dadurch wird sichergestellt, dass die Verpackungsschachtel nicht mit dem mindestens einen Anschlagelement kollidiert, während sich dieses aus der ersten in die zweite Position bewegt. Die ausgerichtete Verpackungsschachtel behält dadurch ihren ausgerichteten Zustand bei, sobald sie freigegeben und weiter in Förderrichtung gefördert wird.

Das mindestens eine Anschlagelement kann aber auch linear zwischen der ersten und der zweiten Position verschoben werden. Z.B. ist das mindestens eine Anschlagelement dann als Stift ausgebildet, der parallel zur ersten oder zweiten Querrichtung in den Transportpfad verschoben wird.

Wird das mindestens eine Anschlagelement zwischen der ersten und der zweiten Position geschwenkt, ist vorzugsweise eine Welle vorgesehen, die sich quer zur Förderrichtung erstreckt und die Schwenkachse definiert, wobei auf der Welle mindestens ein Anschlagelement angeordnet ist. Ist eine Mehrzahl von Anschlagelementen vorgesehen, sind vorzugsweise eine erste und eine zweite Welle vorgesehen, wobei sich die erste Welle auf einer Seite des Transportpfads quer zur Förderrichtung erstreckt und die zweite Welle auf einer der ersten Welle gegenüberliegenden Seite des Transportpfads quer zur Förderrichtung erstreckt. Mindestens ein Anschlagelement ist dann auf der ersten Welle angeordnet und mindestens ein Anschlagelement ist auf der zweiten Welle angeordnet.

Die Wellen können als zylindrische Wellen ausgebildet sein oder können einen Querschnitt aufweisen, der eine formschlüssige Verbindung zwischen den Wellen und dem jeweiligen Anschlagelement ermöglicht. Grundsätzlich kann jede Welle-Nabe-Verbindung zwischen den Wellen und dem jeweiligen Anschlagelement vorgesehen werden, die sich zur Übertragung eines Drehmoments eignet.

Das Vorsehen zumindest einer Welle zum Schwenken des mindestens einen Anschlagelements hat den Vorteil, dass eine Welle besonders platzsparend in eine Vorrichtung zum Ausrichten von Verpackungsschachteln integrierbar ist, die Schwenkbewegung der auf der Welle gelagerten Anschlagelemente exakt steuerbar ist und verschiedene Antriebe zur Verfügung stehen, um die zumindest eine Welle mit der nötigen Frequenz zwischen der ersten und der zweiten Position hin und her zu bewegen. Zudem lassen sich dadurch mehrere auf einer Welle angeordnete Anschlagelemente auf einfache Art und Weise exakt gleichzeitig schwenken.

Sind mehrere Wellen vorgesehen, auf denen jeweils mindestens ein Anschlagelement angeordnet ist, wie z.B. die erste und die zweite Welle, können die Wellen zudem durch ein Getriebe gekoppelt werden, um ein gleichzeitiges Bewegen der Mehrzahl von Anschlagelementen aus der ersten in die zweite Position des jeweiligen Anschlagelements zu gewährleisten.

Vorzugsweise wird die zumindest eine Welle mittels eines Antriebs angetrieben, wobei der Antrieb vorzugsweise als Servomotor, Drehmagnet, als pneumatischer oder mechanischer Antrieb ausgebildet ist. Wird das mindestens eine Anschlagelement linear bewegt, kommen alle gängigen und hierfür geeigneten Linearantriebe, wie z.B. pneumatische, hydraulische, elektrische oder magnetische Antriebe in Frage.

Sind eine erste und eine zweite Welle vorgesehen, kann jede Welle einen eigenen Antrieb aufweisen, wobei die Antriebe dann zu synchronisieren sind. Das Getriebe zwischen der ersten und der zweiten Welle kann dann entfallen. Ist das Getriebe vorgesehen, ist ein einziger Antrieb zum Antreiben der ersten und der zweiten Welle ausreichend.

Besonders bevorzugt werden die erste und die zweite Fördereinheit synchron und kontinuierlich angetrieben. Vorzugsweise erfolgt das Antreiben auch mit konstanter Geschwindigkeit. Durch das synchrone Antreiben wird erreicht, dass es zu keiner Relativgeschwindigkeit zwischen der ersten und der zweiten Fördereinheit kommt. Da die erste und die zweite Fördereinheit an gegenüberliegenden Seitenflächen der Verpackungsschachteln angreifen, würde eine Relativbewegung zwischen der ersten und der zweiten Fördereinheit zu einer Verschiebung der Seitenflächen der Verpackungsschachtel zueinander und somit zu einem Verzug der Verpackungsschachtel führen.

In einer bevorzugten Ausführungsform nehmen die erste Fördereinheit und die zweite Fördereinheit die Verpackungsschachteln reibschlüssig zwischen sich auf. Die Verpackungsschachteln können so in jeder beliebigen Stellung oder Ausrichtung und somit möglichst schnell durch die Fördereinrichtung übernommen werden und in Förderrichtung gefördert werden. Zudem wird erreicht, dass eine Relativbewegung zwischen der ersten Fördereinheit bzw. der zweiten Fördereinheit und der auszurichtenden Verpackungsschachtel möglich ist, sobald die Verpackungsschachtel zumindest teilweise an dem mindestens einen Anschlagelement anliegt. Dies ist vor allem dann erforderlich, wenn erst ein Teil der Verpackungsschachtel an dem mindestens einen Anschlagelement anliegt, ein anderer Teil der Verpackungsschachtel jedoch noch nicht anliegt und noch an das Anschlagelement zu fördern ist.

Wäre ein Formschluss zwischen der ersten bzw. der zweiten Fördereinheit und den Verpackungsschachteln vorgesehen, würden die den Formschluss herstellenden Elemente die Verpackungsschachteln verformen, sobald die Verpackungsschachteln an dem mindestens einen Anschlagelement anliegen und die Fördereinrichtung sich weiter in Förderrichtung bewegt.

Vorzugsweise fördert die Fördereinrichtung die Verpackungsschachteln mit einer Geschwindigkeit von mindestens 6 m/min, mehr bevorzugt von mindestens 30 m/min und noch mehr bevorzugt von mindestens 60 m/min. Besonders bevorzugt fördert die Fördereinrichtung mindestens 10 Verpackungsschachteln pro Minute, mehr bevorzugt mindestens 200 Verpackungsschachteln pro Minute und noch mehr bevorzugt 300 Verpackungsschachteln pro Minute. In Abhängigkeit der Größe der Verpackungsschachteln ist zum Erreichen der Zielgröße von 300 Verpackungsschachteln pro Minute eine Fördergeschwindigkeit von 6 m/min bis 60 m/min erforderlich. Es ist daher bevorzugt, dass die Fördergeschwindigkeit stufenlos einstellbar ist, um eine Anpassung an verschiedene Verpackungsdimensionen zu ermöglichen.

In einer bevorzugten Ausführungsform wird nach dem Ausrichten der Verpackungsschachtel eine Kennzeichnung auf die Verpackungsschachtel aufgebracht. Die Kennzeichnung kann beispielsweise Angaben über Art, Menge, Wirkung und Anwendung des Verpackungsinhalts enthalten, die einzelne Verpackungsschachteln individuell kennzeichnen (z. B. durch Strichcodes oder QR-Codes) und/oder ein Sicherheitsmerkmal bilden, das eine Manipulation des Verpackungsinhalts ausschließt oder erkennbar macht. Verschiedene der eingangs, detailliert beschriebenen Kennzeichnungen können an dieser Stelle Anwendung finden.

In einer Ausführungsform bildet ein Klebeetikett die Kennzeichnung, das derart auf die Verpackungsschachtel aufgebracht wird, dass es sich von einer ersten Seitenfläche der Verpackungsschachtel über eine Kante der Verpackungsschachtel auf eine zweite Seitenfläche der Verpackungsschachtel erstreckt. Vorzugsweise ist die Verpackungsschachtel als Faltschachtel ausgebildet und eine aus erster und zweiter Seitenfläche der Verpackungsschachtel ist durch eine Deckel- oder Bodenlasche der Faltschachtel gebildet. Beim Öffnen der Verpackungsschachtel durch Herausziehen der Deckel- oder Bodenlasche wird das Klebeetikett folglich beschädigt und macht das erstmalige Öffnen der Verpackungsschachtel ersichtlich. Erstreckt sich das Klebeetikett über eine Kante der Verpackungsschachtel, ist es besonders wichtig, dass die Verpackungsschachtel zuvor korrekt ausgerichtet wurde, d. h., dass die Seitenflächen der Verpackungsschachtel senkrecht zueinander angeordnet sind. Nur dann ist das faltenfreie Aufbringen eines Klebeetiketts auf die Verpackungsschachtel über eine Kante derselben hinweg möglich.

In einer bevorzugten Ausführungsform umfasst das Anordnen des mindestens einen Anschlagelements in der ersten Position das Erfassen einer sich dem mindestens einen Anschlagelement nähernden Verpackungsschachtel mittels eines Sensors, das Senden eines Signals an eine Steuereinrichtung, wenn der Sensor eine Verpackungsschachtel erfasst; und das Veranlassen des Bewegens des mindestens einen Anschlagelements mittels der Steuereinrichtung, wenn die Steuereinrichtung das Signal empfangen hat. Das Anordnen des mindestens einen Anschlagelements in der ersten Position kann auch automatisch nach einer ersten vorbestimmten Zeit nach dem Bewegen des mindestens einen Anschlagelements in die zweite Position erfolgen. Die erste vorbestimmte Zeit reicht dabei aus, um die ausgerichtete Verpackungsschachtel vollständig am mindestens einen Anschlagelement vorbei zu bewegen.

Das Bewegen des mindestens einen Anschlagelements aus der ersten Position in die zweite Position wird durch die Steuereinrichtung veranlasst, sobald ein vorbestimmter Grenzwert erreicht ist.

Dieser vorbestimmte Grenzwert ist vorzugsweise eine vorbestimmte Zeit. In einer bevorzugten Ausführungsform umfasst das Anordnen des mindestens einen Anschlagelements in der zweiten Position dann das Erfassen einer sich dem mindestens einen Anschlagelement nähernden Verpackungsschachtel mittels eines Sensors, das Senden eines Signals an eine Steuereinrichtung, wenn der Sensor eine Verpackungsschachtel erfasst; und das Veranlassen des Bewegens des mindestens einen Anschlagelements in die zweite Position mittels der Steuereinrichtung nach einer zweiten vorbestimmten Zeit, nachdem die Steuereinrichtung das Signal empfangen hat. Die zweite vorbestimmte Zeit reicht aus, um die Verpackungsschachtel vom Sensor zum mindestens einen Anschlagelement zu fördern und an diesem auszurichten. Die zweite vorbestimmte Zeit kann aus dem Abstand des Sensors zum mindestens einen Anschlagelement, einem maximal auftretenden Verzug der Verpackungsschachteln und der Fördergeschwindigkeit berechnet werden und ggf. um eine Pufferzeit verlängert werden.

Der vorbestimmte Grenzwert kann aber auch eine Kraft sein, die die Verpackungsschachtel auf das mindestens eine Anschlagelement ausübt, sobald sie im ausgerichteten Zustand korrekt am zumindest einen Anschlagelement anliegt. Entsprechende Sensoren zur Kraftaufnahme können am mindestens einen Anschlagelement oder an dessen Lagerung, z.B. an der zumindest einen Welle vorgesehen sein.

Beispielsweise wird der Sensor durch eine Lichtschranke gebildet, die sich quer zur Förderrichtung durch den Transportpfad erstreckt.

Eine beispielhafte Vorrichtung zum Ausrichten von quaderförmigen Verpackungsschachteln umfasst eine Fördereinrichtung, die eine erste Fördereinheit und eine der ersten Fördereinheit gegenüberliegende zweite Fördereinheit umfasst, die einen Transportpfad der Verpackungsschachteln definieren und dazu eingerichtet sind, die Verpackungsschachteln in einer Förderrichtung entlang des Transportpfads zu fördern, wobei die erste Fördereinheit und die zweite Fördereinheit jeweils mindestens einen Riemen umfassen und die Verpackungsschachteln zwischen sich aufnehmen. Die Vorrichtung umfasst ferner mindestens ein Anschlagelement, das im Bereich der Fördereinrichtung angeordnet ist und das zwischen einer ersten Position und einer zweiten Position bewegbar ist, wobei das mindestens eine Anschlagelement in der ersten Position in den Transportpfad hineinragt und in der zweiten Position nicht in den Transportpfad hineinragt.

Auf diese Weise wird eine beispielhafte Vorrichtung vorgeschlagen, mit der Verpackungsschachteln während ihres Transports durch die Fördereinrichtung am mindestens einen Anschlagelement schnell und exakt ausgerichtet werden können. Insbesondere eignet sich die Vorrichtung zum Ausführen des zuvor beschriebenen Verfahrens zum Ausrichten von quaderförmigen Verpackungsschachteln. Dies wird insbesondere dadurch erreicht, dass das mindestens eine Anschlagelement in seiner ersten Position in den Transportpfad hineinragt, während die Fördereinrichtung weiter in Förderrichtung bewegt wird. Durch die Fördereinrichtung geförderte Verpackungsschachteln werden dadurch gegen das mindestens eine Anschlagelement gezwungen, bis sie alle an das mindestens eine Anschlagelement angrenzenden Abschnitte an dem mindestens einen Anschlagelement anliegen und dieses die Verpackungsschachteln dann zum weiteren Transport in Förderrichtung freigibt.

Vorzugsweise umfasst die Vorrichtung eine Mehrzahl von Anschlagelementen, wobei die Mehrzahl von Anschlagelementen derart miteinander gekoppelt ist, dass die Anschlagelemente gleichzeitig aus der jeweiligen ersten in die jeweilige zweite Position bewegbar sind. Hierzu können mehrere Antriebe zum Antreiben jeweils eines oder mehrerer Anschlagelement vorgesehen sein, wobei die Antriebe synchron angesteuert werden und dadurch die Kopplung der Anschlagelemente erreicht wird. Die Anschlagelemente können aber auch mechanisch gekoppelt sein, z.B. indem die Anschlagelement auf einem gemeinsamen Träger oder einer gemeinsamen Welle angeordnet sind oder mehrere Wellen mittels eines Getriebes verbunden sind. Durch das gleichzeitige Bewegen wird erreicht, dass die ausgerichtete Verpackungsschachtel nicht mit einem Teil der Mehrzahl von Anschlagelementen kollidiert, wenn einige Anschlagelemente die Verpackungsschachtel bereits freigeben, während sich andere Anschlagelemente noch in der ersten Position befinden. Eine erneute Verschiebung der zuvor ausgerichteten Verpackungsschachtel wird dadurch vermieden.

Die Anschlagstellen der Mehrzahl von Anschlagelementen, an denen die Verpackungsschachtel zum Anliegen kommt, definieren eine Ebene, die senkrecht zur Förderrichtung ausgerichtet ist. Bezüglich der Ausbildung der Ebene wird auf die obigen Ausführungen verwiesen. Liegt die auszurichtende Verpackungsschachtel mit allen an ein Anschlagelement angrenzenden Abschnitten an dem jeweiligen Anschlagelement an, erstreckt sich die voraneilende Seitenfläche der Verpackungsschachtel in der durch die Anschlagstelle bzw.

Anschlagstellen definierten Ebene. Die Seitenflächen der Verpackungsschachtel sind dann senkrecht zueinander ausgerichtet.

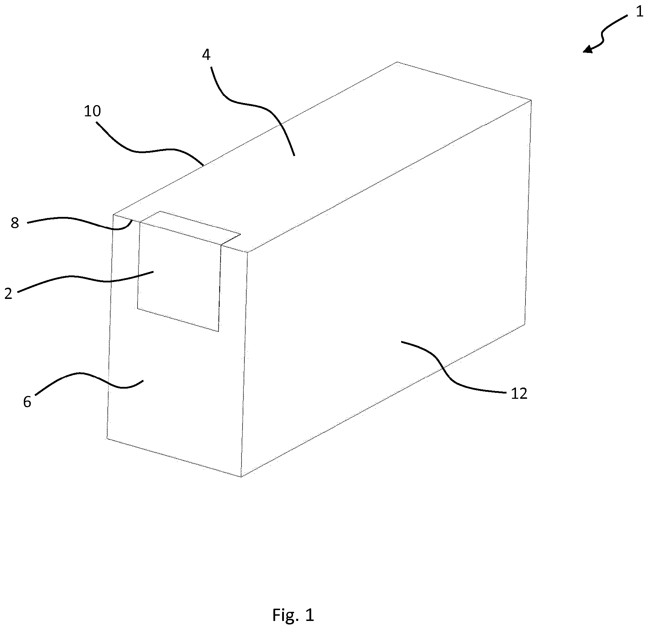

Weitere Merkmale und Vorteile der vorliegenden Erfindung ergeben sich aus der nachfolgenden Beschreibung unter Bezugnahme auf die Zeichnungen, in welchen in Fig. 1 bis 11 unter anderem eine beispielhafte Vorrichtung dargestellt ist, die dazu geeignet ist, das erfindungsgemäße Verfahren durchzuführen und deshalb für ein besseres Verständnis des erfindungsgemäßen Verfahrens im Detail beschrieben ist.
- Fig. 1: zeigt eine beispielhafte Ausführungsform einer auszurichtenden Verpackungsschachtel in einer isometrischen Ansicht.
- Fig. 2: zeigt eine Ausführungsform einer nicht erfindungsgemäßen, beispielhaften Vorrichtung in einer ersten isometrischen Ansicht.
- Fig. 3: zeigt einen Ausschnitt der Vorrichtung nach Fig. 2 in einer anderen isometrischen Ansicht.
- Fig. 4: zeigt die Vorrichtung nach Fig. 2 mit einer Verpackungsschachtel eines größeren Formats in einer isometrischen Ansicht.
- Fig. 5a, b: zeigen einen Ausschnitt der Vorrichtung nach Fig. 1 in einer isometrischen Ansicht und einer Schnittansicht.
- Fig. 6-8: zeigen einen Ausschnitt der Vorrichtung nach Fig. 1 während des erfindungsgemäßen Verfahrens in einer Seitenansicht.
- Fig. 9-11: zeigen einen Ausschnitt der Vorrichtung nach Fig. 1 während des erfindungsgemäßen Verfahrens in einer Draufsicht.

Fig. 1 zeigt eine Verpackungsschachtel 1, wie sie beispielsweise zur Verpackung von pharmazeutischen Produkten verwendet wird. Die Verpackungsschachtel 1 ist quaderförmig ausgebildet, weist also Seitenflächen auf, die im Wesentlichen senkrecht zueinander ausgerichtet sind. Die Verpackungsschachtel 1 ist vorzugsweise als Faltschachtel ausgebildet. Eine Faltschachtel wird üblicherweise durch Einschieben jeweils einer Einstecklasche mittels einer Boden- und einer Deckellasche verschlossen. Die Verpackungsschachtel 1 wird in einer Kartoniermaschine aufgerichtet, mit Produkten (z.B. Blisterpackungen) und einem Beipackzettel befüllt und anschließend verschlossen. In der Kartoniermaschine wird die Verpackungsschachtel 1 formstabil transportiert, um das zuverlässige Einfügen von Produkten in die Verpackungsschachtel 1 zu gewährleisten. An einem Ausgang der Kartoniermaschine wird die Verpackungsschachtel an eine Folgemaschine übergeben, z. B. an eine Etikettiermaschine und/oder Serialisierungsmaschine.

Zwischen der Kartoniermaschine und der Folgemaschine befindet sich eine Schnittstelle z. B. in Form eines Austragebands. Da in der Folgemaschine üblicherweise andere Anforderungen an die Förderung im Vordergrund stehen, werden die Verpackungsschachteln dort nicht mehr formstabil transportiert. Insbesondere bei der Übergabe zwischen Kartoniermaschine und Folgemaschine kann es deshalb zum Verzug der Verpackungsschachtel 1 kommen, sodass zumindest ein Teil der Seitenflächen der Verpackungsschachtel 1 nicht mehr senkrecht zueinander ausgerichtet ist.

Dies kann sich jedoch nachteilig auf den nachfolgenden Prozess auswirken. Sind beispielsweise die Ränder der Verpackungsschachtel 1 aufgrund des Verzugs relativ zu ihrer Soll-Position bei korrekt ausgerichteter Verpackungsschachtel 1 verschoben, kann dies dazu führen, dass eine Kennzeichnung in der Folgemaschine nicht mehr korrekt auf die Verpackungsschachtel 1 aufgebracht werden kann. Wird auf die Verpackungsschachtel 1 beispielsweise in der Folgemaschine eine Kennzeichnung in einem dafür vorgesehenen Bereich auf die Verpackungsschachtel 1 aufgebracht, z. B. aufgedruckt, aufgeklebt oder aufgelasert, führt ein Verzug der Verpackungsschachtel 1 dazu, dass der für die Kennzeichnung vorgesehene Bereich nicht mehr mit dem Bereich übereinstimmt, in dem die Kennzeichnung tatsächlich aufgebracht wird.

Im Ausführungsbeispiel nach Fig. 1 ist die Kennzeichnung 2 beispielhaft durch ein Klebeetikett gebildet. Das Klebeetikett erstreckt sich von einer ersten Seitenfläche 4 der Verpackungsschachtel 1 über eine Kante 8 der Verpackungsschachtel 1 auf eine zweite Seitenfläche 6 der Verpackungsschachtel 1. Die erste Seitenfläche 4 und die zweite Seitenfläche 6 sind im ausgerichteten Zustand der Verpackungsschachtel 1 senkrecht zueinander angeordnet. Die zweite Seitenfläche 6 entspricht vorzugsweise einer Deckel- oder Bodenlasche der Verpackungsschachtel 1. Das Klebeetikett wird in einer Etikettiermaschine auf die Verpackungsschachtel 1 aufgebracht. Hierzu wird zunächst ein Abschnitt des Klebeetiketts 2 auf die erste Seitenfläche 4 oder die zweite Seitenfläche 6 geklebt und das Klebeetikett dann mittels geeigneter Führungseinrichtung um die Kante 8 gelegt und mit der anderen aus erster Seitenfläche 4 und zweiter Seitenfläche 6 verklebt.

Ist die Verpackungsschachtel 1 nicht korrekt ausgerichtet, sind z. B. eine dritte Seitenfläche 10 und eine vierte Seitenfläche 12 nicht senkrecht zur ersten Seitenfläche 4 ausgerichtet und/oder ist die zweite Seitenfläche 6 nicht senkrecht zur ersten Seitenfläche 4 ausgerichtet, kommt es beim Aufbringen des Klebeetiketts 2 oder nach dem Zurückstellen der Verpackungsschachtel 1 in einen ausgerichteten Zustand zur Faltenbildung des Klebeetiketts im Bereich der Kante 8 der Verpackungsschachtel 1. Zur Sicherung der Qualität der Verpackung und des Sicherheitsmerkmals in Form der Kennzeichnung 2 ist eine solche Faltenbildung zu vermeiden.

Aber auch bei anderen Kennzeichnungen der Verpackungsschachtel 1 ist es vorteilhaft, wenn der für die Kennzeichnung vorgesehene Bereich mit dem Bereich übereinstimmt, in dem die Kennzeichnung tatsächlich auf die Verpackungsschachtel aufgebracht wird.

Dies kann dadurch erreicht werden, dass die jeweilige Verpackungsschachtel 1 mittels des erfindungsgemäßen Verfahrens ausgerichtet wird.

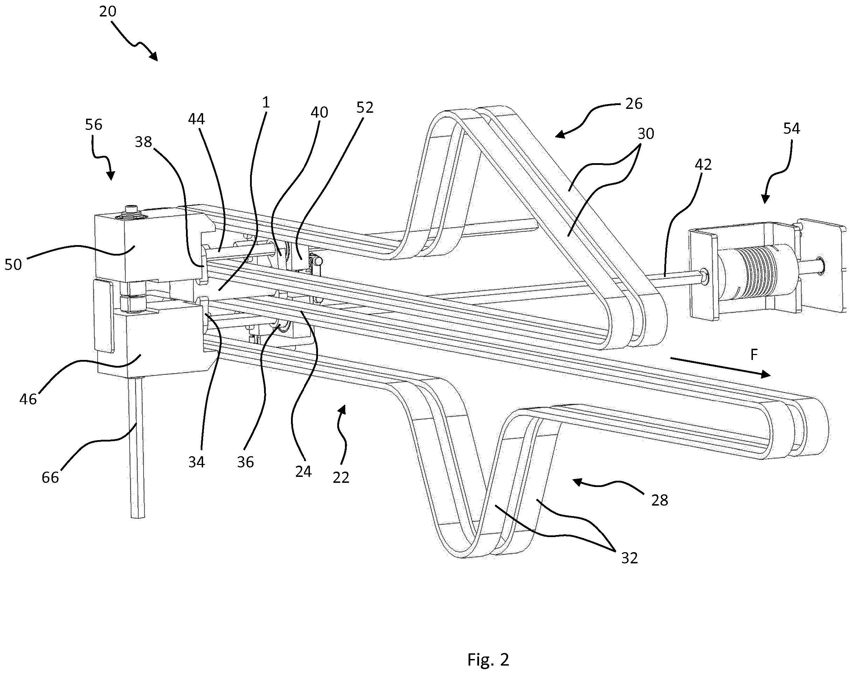

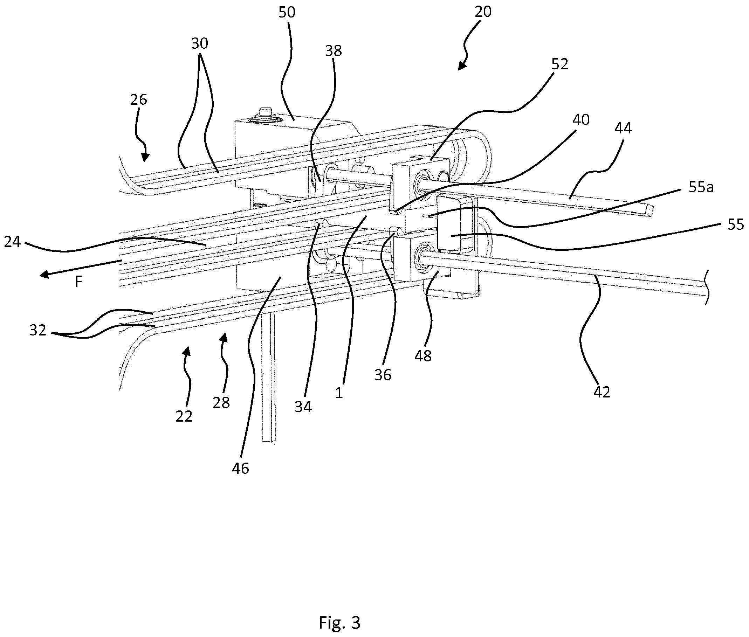

Die Fig. 2 und Fig. 3 zeigen eine beispielhafte Ausführungsform einer nicht erfindungsgemäßen Vorrichtung 20 in einer isometrischen Darstellung. Zur besseren Übersicht sind ein Maschinengestell sowie die Lagerung der Vorrichtung 20 im Maschinengestell nicht dargestellt.

Die Vorrichtung 20 umfasst eine Fördereinrichtung 22 zum Fördern von Verpackungsschachteln 1 entlang eines Transportpfads 24 in eine Förderrichtung F. Die Fördereinrichtung 22 umfasst eine erste Fördereinheit 26 und eine der ersten Fördereinheit 26 gegenüberliegende zweite Fördereinheit 28. Die erste Fördereinheit 26 und die zweite Fördereinheit 28 definieren den Transportpfad 24, nehmen die Verpackungsschachteln 1 zwischen sich auf und fördern diese gemeinsam in Förderrichtung F. Insbesondere umfassen sowohl die erste Fördereinheit 26 als auch die zweite Fördereinheit 28 jeweils zumindest einen Riemen 30, 32. Die Riemen 30, 32 der ersten Fördereinheit 26 und der zweiten Fördereinheit 28 verlaufen abschnittsweise parallel zueinander und parallel zur Förderrichtung F und sind dabei quer zur Förderrichtung F derart zueinander beabstandet, dass sie zwischen sich die Verpackungsschachteln 1 aufnehmen. Die erste Fördereinheit 26 und die zweite Fördereinheit 28 stehen in Reibschluss mit den Verpackungsschachteln 1 bzw. den der jeweiligen Fördereinheit 26, 28 zugewandten Seitenflächen der Verpackungsschachtel 1. Die parallel verlaufenden Abschnitte der ersten und der zweiten Fördereinheit 26, 28, in denen die Verpackungsschachteln 1 zwischen der ersten Fördereinheit 26 und der zweiten Fördereinheit 28 aufgenommen sind, definieren den Transportpfad 24.

In der dargestellten Ausführungsform ist die erste Fördereinheit 26 durch einen Oberläufer und die zweite Fördereinheit 28 durch einen Unterläufer gebildet, wobei der Oberläufer zwei Riemen 30 und der Unterläufer zwei Riemen 32 aufweist. Die erste und die zweite Fördereinheit 26, 28 müssen aber nicht zwangsläufig durch einen Ober- und einen Unterläufer gebildet werden. Vielmehr können die erste und die zweite Fördereinheit 26, 28 auch seitlich der zu fördernden Verpackungsschachteln angeordnet sein und sich in einer horizontalen Ebene quer zur Förderrichtung F gegenüberliegen. Dem Fachmann sind verschiedene Ausführungsformen von Fördereinrichtungen 22 bekannt, mit denen sich Verpackungsschachteln 1 zuverlässig mit der erforderlichen Geschwindigkeit transportieren lassen.

Die Vorrichtung 20 kann weiterhin eine erste und eine zweite Seitenführung umfassen (nicht dargestellt), die einander quer zur Förderrichtung F gegenüberliegen und parallel zur Förderrichtung F entlang des Transportpfads 24 erstrecken. Die Seitenführungen können Führungsflächen bilden, die an den Seitenflächen der Verpackungsschachtel 1 anliegen, die nicht in Eingriff mit der Fördereinrichtung 22 stehen. Umfasst die Fördereinrichtung 22 beispielsweise einen Ober- und einen Unterläufer, sind die erste und die zweite Seitenführung an horizontal gegenüberliegenden Seitenflächen der Verpackungsschachtel 1 entlang des Transportpfads 24 angeordnet. Generell sind jedoch Seitenführungen nicht unbedingt notwendig.

Die Riemen 30, 32 der ersten und der zweiten Fördereinheit 26, 28 sind bevorzugt als endlos umlaufende Riemen ausgebildet, die zur Spannung der Riemen um entsprechende Umlenkrollen geführt sind. Die Umlenkrollen der Riemen 30, 32 sind im Maschinengestell gelagert, aus Gründen der besseren Übersicht jedoch in den Figuren nicht dargestellt. Zudem umfassen die erste und die zweite Fördereinheit 26, 28 einen Antrieb, beispielsweise mittels einer angetriebenen Rolle. Die erste und die zweite Fördereinheit 26, 28 können einen gemeinsamen Antrieb umfassen oder jeweils einen eigenen Antrieb umfassen. Die erste und die zweite Fördereinheit 26, 28 werden bevorzugt synchron angetrieben, um eine die Verpackungsschachteln 1 verformende Relativbewegung zwischen der ersten Fördereinheit 26 und der zweiten Fördereinheit 28 zu vermeiden. Zudem werden die erste und die zweite Fördereinheit 26, 28 bevorzugt kontinuierlich und mit konstanter Geschwindigkeit angetrieben. Insbesondere während des nachfolgend beschriebenen Ausrichtens der Verpackungsschachteln 1 werden die erste und die zweite Fördereinheit 26, 28 kontinuierlich, vorzugsweise konstant weiter in Förderrichtung F angetrieben. Es ist auch denkbar, dass die erste und die zweite Fördereinheit 26, 28 schwellend betrieben werden, also ein Geschwindigkeitsprofil aufweisen, wobei dies jedoch einen erhöhten Steuerungsaufwand zur Folge hat.

Die Vorrichtung 20 umfasst ferner mindestens ein Anschlagelement 34 zum Ausrichten der von der Fördereinrichtung 22 geförderten Verpackungsschachteln 1. Das mindestens eine Anschlagelement 34 zeichnet sich dadurch aus, dass es in einer ersten Position des Anschlagelements 34 in den Tarnsportpfad 24 der Verpackungsschachtel 1 hineinragt. Eine von der Fördereinrichtung 22 in Förderrichtung F geförderte Verpackungsschachtel 1 wird deshalb gegen das mindestens eine Anschlagelement 34 gefördert.

Das mindestens eine Anschlagelement 34 ist derart ausgebildet, dass eine quaderförmige Verpackungsschachtel 1 korrekt ausgerichtet ist, das heißt, dass ihre Seitenflächen senkrecht zueinander ausgerichtet sind, wenn die Verpackungsschachtel 1 mit allen an mindestens ein Anschlagelement 34 angrenzenden Abschnitten an dem mindestens einen Anschlagelement 34 anliegt. Dies wird dadurch erreicht, dass eine Anschlagstelle oder mehrere Anschlagstellen des mindestens eines Anschlagelements 34, an der oder an denen die Verpackungsschachtel 1 zum Anliegen kommt, eine Ebene definieren, die senkrecht zur Förderrichtung F ausgerichtet ist.

Das mindestens eine Anschlagelement 34 ist in seiner ersten Position so im Transportpfad 24 angeordnet, dass eine voraneilende Seitenfläche der Verpackungsschachtel 1 bzw. Randabschnitte derselben gegen das mindestens eine Anschlagelement 34 gefördert werden. Liegen alle an das mindestens eine Anschlagelement 34 bzw. an die Anschlagstelle oder Anschlagstellen angrenzenden Abschnitte der Verpackungsschachtel 1 an dem mindestens einen Anschlagelement 34 an, liegt die voraneilende Seitenfläche der Verpackungsschachtel 1 folglich in der Ebene, die durch die Anschlagstelle oder Anschlagstellen definiert ist.

Hierzu sind verschiedene, hier beispielhaft erläuterte Ausführungsformen denkbar. Es ist beispielsweise möglich, nur ein Anschlagelement vorzusehen, das sich möglichst großflächig erstreckt. Ein solches Anschlagelement kann z.B. als ein Riegel ausgebildet sein, der als Anschlagstelle eine Anschlagfläche aufweist, die sich in der ersten Position des Anschlagelements senkrecht zur Förderrichtung F erstreckt. Die Anschlagfläche ist so groß zu gestalten, dass die Verpackungsschachtel 1 an dieser ausgerichtet wird, wenn die Fördereinrichtung 22 die Verpackungsschachtel 1 gegen die Anschlagfläche zwingt.

Es ist bevorzugt, eine Mehrzahl von dem kleineren Anschlagelementen vorzusehen, die eine entsprechende Ebene zum Ausrichten der Verpackungsschachteln 1 definieren. In Abhängigkeit von der Steifigkeit der verwendeten Verpackungsschachteln 1 können dabei mehr oder weniger Anschlagelemente vorzusehen sein.

In der in den Fig. 2 und 3 dargestellten beispielhaften Ausführungsform der Vorrichtung 20 umfasst diese vier Anschlagelemente, nämlich ein erstes Anschlagelement 34, ein zweites Anschlagelement 36, ein drittes Anschlagelement 38 und ein viertes Anschlagelement 40. Es versteht sich, dass der Fachmann anhand der beispielhaften Beschreibung dieser Ausführungsform, die stellvertretend für jede Mehrzahl von Anschlagelementen erfolgt, in der Lage ist, die Vorrichtung 20 an eine beliebige Anzahl von Anschlagelementen anzupassen.

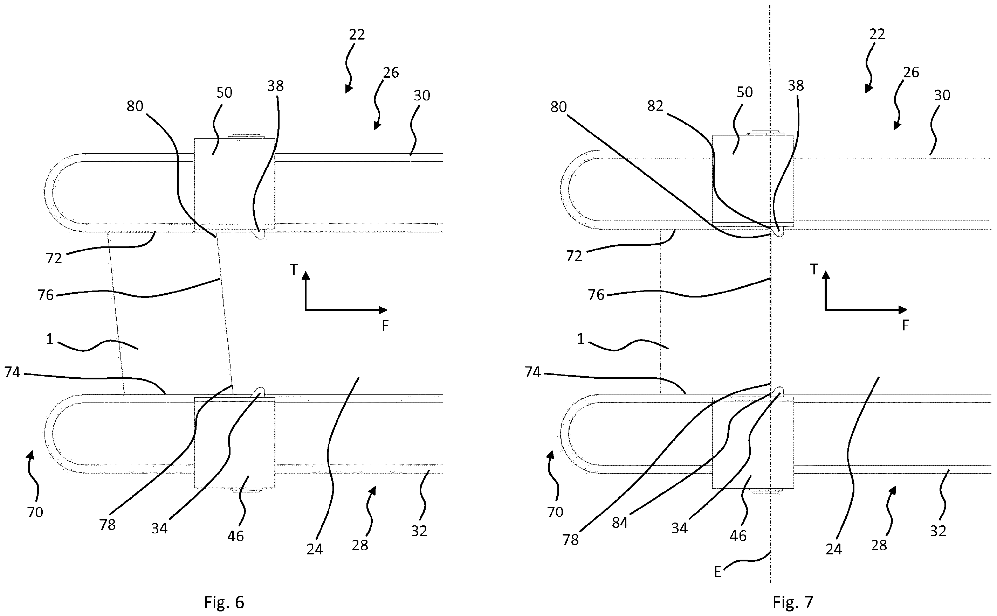

Die Anschlagelemente 34, 36, 38, 40 sind in ihrer ersten Position dargestellt, in der sie jeweils in den Transportpfad 24 der Verpackungsschachtel 1 hineinragen. Dabei erstrecken sich das erste und das zweite Anschlagelement 34, 36 von einer Unterseite des Transportpfads 24 in diesen hinein und das dritte und das vierte Anschlagelement 38, 40 erstrecken sich von einer Oberseite in den Transportpfad 24 hinein. Das erste und das zweite Anschlagelement 34, 36 bilden dadurch Anschlagstellen für einen unteren Randabschnitt der voraneilenden Seitenfläche der Verpackungsschachtel 1 und das dritte und das vierte Anschlagelement bilden Anschlagstellen eines oberen Randabschnitts der voraneilenden Seitenfläche der Verpackungsschachtel 1. Dies wird besonders gut anhand der weiter unten beschriebenen Fig. 6 bis 8 deutlich.

Die Anschlagelemente 34, 36, 38, 40 sind außerhalb des Transportpfads 24 derart gelagert, dass sie aus der dargestellten ersten Position in eine zweite Position bewegt werden können, in der sie nicht in den Transportpfad 24 hineinragen. Um ein möglichst gleichmäßiges Ausrichten der Verpackungsschachtel 1 zu gewährleisten, sind das erste und das zweite Anschlagelement 34, 36 bzw. das dritte und das vierte Anschlagelement 38, 40 in einer Richtung quer zur Förderrichtung F möglichst weit beabstandet voneinander angeordnet. Vorzugsweise nehmen das erste und das zweite Anschlagelement 34, 36 den zumindest einen Riemen 32 der zweiten Fördereinheit 28 zwischen sich auf und das dritte und das vierte Anschlagelement 38, 40 nehmen den zumindest einen Riemen 30 der ersten Fördereinheit 26 zwischen sich auf. Befinden sich die Anschlagelemente 34, 36, 38, 40, wie dargestellt, jeweils in ihrer ersten Position, blockieren sie die Verpackungsschachtel 1, sodass diese durch die Fördereinrichtung 22 nicht weiter in Förderrichtung F bewegt werden kann.

In der Ausführungsform, wie sie in den Fig. 2 bis 5 dargestellt ist, sind die Anschlagelemente 34, 36, 38, 40 schwenkbeweglich gelagert, sodass sie aus der ersten Position in die zweite Position geschwenkt werden können. Dies lässt sich vorzugsweise dadurch erreichen, dass die Anschlagelemente auf einer Welle angeordnet sind, die sich quer zur Förderrichtung F erstreckt und eine Schwenkachse für die Anschlagelemente definiert.

Die Vorrichtung 20 umfasst daher mindestens eine erste Welle 42, auf der das mindestens eine Anschlagelement 34 angeordnet ist. Im dargestellten Ausführungsbeispiel sind das erste und das zweite Anschlagelement 34, 36 auf der ersten Welle 42 angeordnet und das dritte und das vierte Anschlagelement 38, 40 sind auf einer zweiten Welle 44 angeordnet. Die erste und die zweite Welle 40, 42 erstrecken sich horizontal quer zur Förderrichtung F. Die Wellen 40, 42 können sich in anderen Ausführungsformen aber auch in einer beliebigen anderen Richtung quer zur Förderrichtung F erstrecken, insbesondere auch vertikal. Die Anschlagelemente 34, 36, 38, 40 können integral mit der Welle ausgebildet sein, z. B. in Form einer Nockenwelle, oder als separate Elemente auf der jeweiligen Welle 42, 44 gelagert sein. Das erste, das zweite, das dritte und das vierte Anschlagelement 34, 36, 38, 40 sind hier nockenförmig ausgebildet und formschlüssig auf der jeweiligen Welle 42, 44 gelagert. Alternativ ist auch eine kraft- oder stoffschlüssige Verbindung der Anschlagelemente mit der jeweiligen Welle denkbar. Der Fachmann kann die Gestalt und Lagerung der Anschlagelemente beliebig an die jeweils gegebenen Anforderungen anpassen.

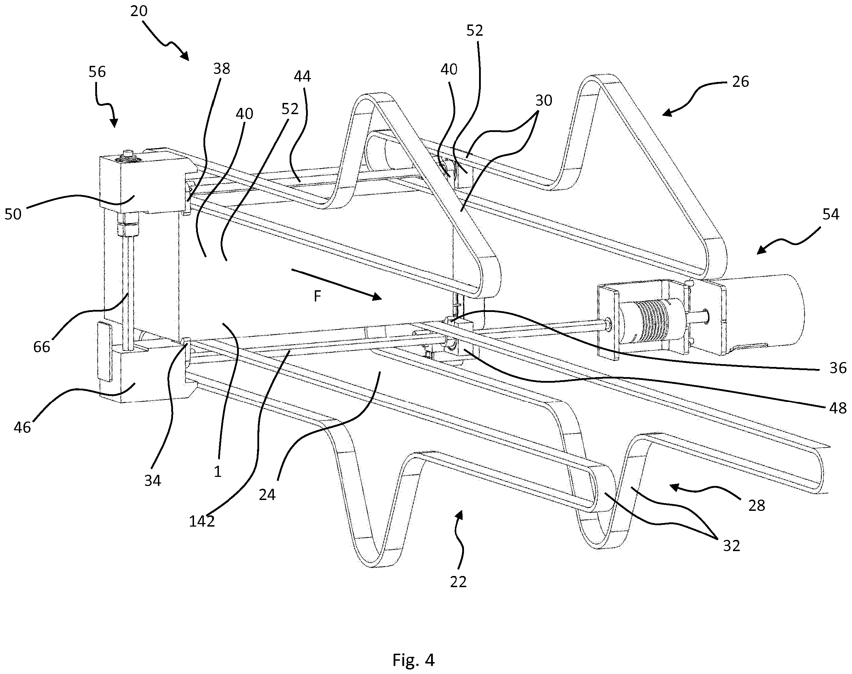

Jede Welle 42, 44 ist in jeweils zwei Lagerblöcken gelagert. Die erste Welle 42 ist in einem ersten und einem zweiten Lagerblock 46, 48 drehbar gelagert und die zweite Welle 44 ist in einem dritten und einem vierten Lagerblock 50, 52 drehbar gelagert. Die Lagerblöcke 46, 48, 50, 52 können verschiebbar im Maschinengestell gelagert sein, um das Anpassen der Vorrichtung 20 an verschiedene Verpackungsformate zu ermöglichen. Aus einer Zusammenschau der Fig. 2 und 4 ist ersichtlich, dass die Lagerblöcke 46, 48, 50, 52 verschiebbar sein können, um den Abstand zwischen der ersten und der zweiten Welle zu verändern. Zudem kann zumindest einer aus erstem und zweiten Lagerblock 46, 48 entlang der ersten Welle 42 und zumindest einer aus drittem und viertem Lagerblock 50, 52 entlang der zweiten Welle 44 verschiebbar sein, um den Abstand der Anschlagelemente zu vergrößern. Schließlich können auch die erste und die zweite Fördereinheit 26, 28 entsprechend an das Verpackungsformat anpassbar sein. Hierzu kann der Abstand der ersten Fördereinheit 26 zur zweiten Fördereinheit 28 z.B. durch Verschieben der Lage der parallel verlaufenden Riemenabschnitte der Riemen 30, 32 angepasst werden. Umfasst jede Fördereinheit 26, 28 mehr als einen Riemen, kann auch der Abstand zwischen den Riemen einer Fördereinheit angepasst werden.

Zumindest eine aus erster und zweiter Welle 42, 44 wird durch einen Antrieb 54 angetrieben. Für den Antrieb 54 kommen alle dem Fachmann bekannten Antriebe zum drehbeweglichen Antreiben von Wellen infrage. Der Antrieb 54 ist mit einer Steuereinrichtung (nicht dargestellt) verbunden, die den Antrieb 54 ansteuert, um die Anschlagelemente zum richtigen Zeitpunkt zwischen der ersten Position und der zweiten Position zu bewegen.

Wie in Fig. 3 zu erkennen ist, kann die Vorrichtung 20 weiterhin einen Sensor 55 umfassen. Der Sensor 55 wird beispielsweise durch eine Lichtschranke gebildet, deren Lichtstrahl 55a quer zur Förderrichtung F ausgerichtet ist. Der Sensor 55 erfasst, wenn sich eine Verpackungsschachtel dem mindestens einen Anschlagelement 34 nähert. Der Sensor 55 sendet ein Signal an die Steuereinrichtung, wenn er eine Verpackungsschachtel 1 erfasst. Die Steuereinrichtung veranlasst, dass die Anschlagelemente in die erste Position bewegt werden und dort spätestens dann angeordnet sind, wenn sich die Verpackungsschachtel 1 unmittelbar vor den Anschlagelementen befindet. Hierzu steuert die Steuereinrichtung den Antrieb 54 an. Es versteht sich, dass der Sensor 55 an beliebiger Stelle vor den Anschlagelementen angeordnet sein kann und aus der Distanz zu den Anschlagelementen sowie der Fördergeschwindigkeit eine Zeit berechnet werden kann, die zum Anordnen der Anschlagelemente in der ersten Position verbleibt. Vorzugsweise erfasst der Sensor 55 die Verpackungsschachteln 1 auch, wenn diese an den Anschlagelementen anliegen.

Um eine durch die Anschlagelemente 34, 36, 38, 40 ausgerichtete Verpackungsschachtel 1 im korrekt ausgerichteten Zustand weiter in Förderrichtung F zu fördern, müssen die Anschlagelemente 34, 36, 38, 40 gleichzeitig aus der ersten Position in die zweite Position bewegt werden. Hierzu sind verschiedene Möglichkeiten denkbar. Zum einen können die Anschlagelemente durch mehrere getrennte Antriebe von der ersten in die zweite Position bewegt werden, wobei die Antriebe derart angesteuert sind, dass sich die Anschlagelemente gleichzeitig aus dem Transportpfad 24 herausbewegen. Beispielsweise treibt der Antrieb 54 die erste Welle 42 an und es ist ein weiterer Antrieb vorgesehen, der die zweite Welle 44 antreibt. Die beiden Antriebe werden dann so angesteuert, dass sie die erste und die zweite Welle 42, 44 und dadurch das erste und das zweite Anschlagelement 34, 36 bzw. das dritte und das vierte Anschlagelement 38, 40 um die durch die jeweilige Welle 40, 42 definierte Schwenkachse drehen. Dadurch werden die Anschlagelemente 34 bis 40 zwischen der ersten Position und der zweiten Position geschwenkt.

In der dargestellten Ausführungsform umfasst die Vorrichtung 20 ein Getriebe 56 zum Übertragen der Drehbewegung von einer aus erster und zweiter Welle 42, 44 auf die jeweils andere aus erster und zweiter Welle 42, 44. Als Getriebe 56 kommen alle dem Fachmann bekannten Getriebe zum Übertragen einer Drehbewegung bzw. eines Moments von einer Welle auf eine andere Welle infrage. Das Getriebe 56 kann beispielsweise durch Stirnräder gebildet sein, wobei jeweils zumindest ein Stirnrad auf einer der Wellen angeordnet ist, durch einen Riemen, wie z. B. einen Zahnriemen gebildet sein, und ein festes Übersetzungsverhältnis oder mehrere stufenweise oder stufenlos verstellbare Übersetzungsverhältnisse umfassen.

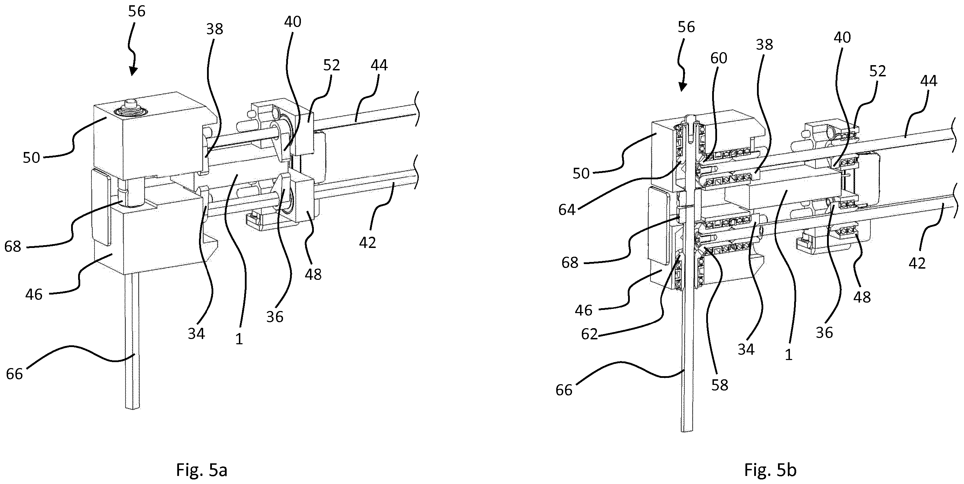

Eine bevorzugte Ausführungsform des Getriebes 56 ist in den Fig. 5a und 5b dargestellt. Das Getriebe 56 umfasst ein erstes Kegelrad 58, ein zweites Kegelrad 60, ein drittes Kegelrad 62 und ein viertes Kegelrad 64. Das erste Kegelrad 58 ist auf der ersten Welle 42 drehfest gelagert, beispielsweise formschlüssig mit der ersten Welle 42 verbunden. Das zweite Kegelrad 60 ist auf entsprechende Art und Weise auf der zweiten Welle 44 drehfest gelagert. Das Getriebe 56 umfasst ferner eine dritte Welle 66, die sich senkrecht zur ersten Welle 42 und zur zweiten Welle 44 erstreckt. Die Drehachse der dritten Welle 66 schneidet sowohl die Dreh- bzw. Schwenkachse der ersten Welle 42 als auch die Dreh- bzw. Schwenkachse der zweiten Welle 44. Das dritte und das vierte Kegelrad 62, 64 sind auf der dritten Welle 66 drehfest gelagert, beispielsweise formschlüssig mit der dritten Welle 66 verbunden. Das dritte Kegelrad 62 ist dabei derart auf der dritten Welle 66 gelagert, dass es mit dem ersten Kegelrad 58 auf der ersten Welle 42 kämmt und das vierte Kegelrad 64 ist derart auf der dritten Welle 66 gelagert, dass es mit dem zweiten Kegelrad 60 auf der zweiten Welle 44 kämmt. Das erste und das dritte Kegelrad 58, 62 sind drehbar im ersten Lagerblock 46 gelagert, beispielsweise mittels Wälzlagern. Entsprechend sind das zweite und das vierte Kegelrad 60, 64 im dritten Lagerblock 50 drehbar gelagert. Dadurch ist auch die dritte Welle 66 in zwei Lagerblöcken, nämlich dem ersten Lagerblock 46 und dem dritten Lagerblock 50 drehbar gelagert. Um die Formatanpassung nach Fig. 4 zu ermöglichen, ist es vorteilhaft, wenn zumindest einer aus erstem und drittem Lagerblock 46, 50 entlang der dritten Welle 66 verschiebbar ist.

Eine Drehbewegung bzw. ein Drehmoment kann nun von der ersten Welle 42 über das erste und das dritte Kegelrad 58, 62 auf die dritte Welle 66 und von der dritten Welle 66 über das zweite und das vierte Kegelrad 60, 64 auf die zweite Welle 44 übertragen werden. Es ist daher ausreichend, wenn nur ein Antrieb 54 zum Bewegen der Anschlagelemente 34, 36, 38, 40 vorgesehen ist. Der Antrieb 54 kann nun mit einer aus erster, zweiter und dritter Welle 42, 44, 66 verbunden sein, wobei die durch den Antrieb 54 erzeugte Drehbewegung über das Getriebe 56 auf die jeweils anderen beiden Wellen 42, 44, 66 übertragen wird.

Um die Stellung der Anschlagelemente 34, 36 auf einer Seite des Transportpfads 24 relativ zu den gegenüberliegenden Anschlagelementen 38, 40 einstellen zu können, kann das Getriebe 56 weiterhin eine Kupplung 68 aufweisen. Im dargestellten Ausführungsbeispiel ist die dritte Welle 66 zweiteilig ausgebildet, wobei die zwei Teile der dritten Welle 66 mittels der Kupplung 68 verbunden sind. Mittels der Kupplung 68 kann die Drehbewegung der ersten Welle 42 von der Drehbewegung der zweiten Welle 44 entkoppelt werden. Die Stellung des ersten und des zweiten Anschlagelements 34, 36 auf der ersten Welle kann dadurch unabhängig von der Stellung des dritten und des vierten Anschlagelements 38, 40 verändert werden und umgekehrt.

Es sind für den Fachmann verschiedene Abwandlungen der im Detail beschriebenen beispielhaften Ausführungsform ersichtlich. Ist eine Verpackungsschachtel 1 aufgrund ihrer Gestaltung oder Dimensionierung beispielsweise relativ steif oder erlaubt nur eine geringe Verbiegung oder Verschiebung der Seitenflächen relativ zueinander, kann es ausreichen, nur zwei Anschlagelemente vorzusehen. Tritt beispielsweise nur eine Verschiebung zwischen der Oberkante und Unterkante einer voraneilenden Seitenfläche einer Verpackungsschachtel auf, kann es ausreichen nur ein Anschlagelement im Bereich der Oberkante und ein Anschlagelement im Bereich der Unterkante anzuordnen. Ist die Verpackungsschachtel hingegen relativ formstabil, ist aber schräg bezüglich einer horizontalen Querrichtung angeordnet, können zwei Anschlagelemente ausreichen, die in einem linken und einem rechten Randbereich angeordnet sind, z.B. das erste und das zweite Anschlagelement 34, 36. Bevorzugt sind zur Definition der Ebene, an der die voraneilende Seitenfläche ausgerichtet wird, zumindest drei Anschlagelemente vorgesehen, von denen zwei auf einer Seite des Transportpfads 24 angeordnet sind und zumindest eines auf der gegenüberliegenden Seite des Transportpfads 24 angeordnet ist.

Das erfindungsgemäße Verfahren ist nachfolgend unter Bezugnahme auf die Fig. 6 bis 11 und anhand der Vorrichtung 20 nach Fig. 2 bis 5 beschrieben.

Eine Verpackungsschachtel 1 wird an einem Eingang 70 der Vorrichtung 20 an die Fördereinrichtung 22 übergeben. Die Übergabe erfolgt in der Regel von einer Kartoniermaschine mittels einer Schnittstelle, z. B. eines Austragebands. Aufgrund des nicht formstabilen Transports der Verpackungsschachtel 1 in der Schnittstelle oder bei der Übergabe an die Fördereinrichtung 22 kann es dazu kommen, dass die ursprünglich quaderförmige Verpackungsschachtel 1 verformt wird, sodass ihre Seitenflächen nicht mehr senkrecht zueinander ausgerichtet sind.

Die Fördereinrichtung 22 fördert die Verpackungsschachtel 1 entlang des Transportpfads 24 in Förderrichtung F. Hierzu umfasst die Fördereinrichtung 22 die erste Fördereinheit 26 und die zweite Fördereinheit 28. Im dargestellten Ausführungsbeispiel greift der Riemen 30 der ersten Fördereinrichtung 26 an einer der eine Oberseite 72 bildenden ersten Seitenfläche 4 der Verpackungsschachtel 1 an und der Riemen 32 der zweiten Fördereinrichtung 28 greift an einer der Oberseite 72 gegenüberliegenden Unterseite 74 der Verpackungsschachtel 1 an. Die erste und die zweite Fördereinrichtung 26, 28 bzw. deren Riemen 30, 32 stehen reibschlüssig mit der Verpackungsschachtel 1 in Verbindung.

Wie in Fig. 6 zu erkennen ist, ist die Verpackungsschachtel 1 zumindest in Förderrichtung F verformt. Genauer ist die Verpackungsschachtel 1 in Förderrichtung F nach hinten geneigt, sodass die eine voraneilende Seitenfläche 76 bildende vierte Seitenfläche 12 der Verpackungsschachtel 1 nicht senkrecht zur Oberseite 72 und zur Unterseite 74 ausgerichtet ist. Die voraneilende Seitenfläche 76 ist schräg zur ersten Querrichtung T ausgerichtet, die sich senkrecht zur Förderrichtung F, vorzugsweise vertikal, erstreckt. Diese Schrägstellung gilt es mittels des erfindungsgemäßen Verfahrens zu beseitigen.

In den Fig. 6 und 7 ist zu sehen, dass das mindestens eine Anschlagelement, hier zumindest zwei Anschlagelemente, die durch das erste und das vierte Anschlagelement 36, 38 der zuvor beschriebenen Vorrichtung 20 gebildet sein können, in der ersten Position angeordnet sind. Die Verpackungsschachtel 1 wird gegen das mindestens eine Anschlagelement 34 gefördert. Die Fördereinrichtung 22 bewegt sich relativ zu dem mindestens einen Anschlagelement 34 weiter in Förderrichtung F und zwingt dadurch die Verpackungsschachtel 1 gegen das mindestens eine Anschlagelement 34, bis alle an ein Anschlagelement 34, 38 angrenzenden Abschnitte der Verpackungsschachtel 1 an dem jeweiligen Anschlagelement 34, 38 angrenzen.

In der dargestellten Ausführungsform trifft ein unterer Randabschnitt 78 der voraneilenden Seitenfläche 76 der Verpackungsschachtel 1 auf das erste Anschlagelement 34 und, falls vorhanden, auf das quer zur Förderrichtung F neben diesem angeordnete zweite Anschlagelement 36. Zumindest das erste Anschlagelement 34 verhindert dann, dass der untere Teil der Verpackungsschachtel 1 weiter in Förderrichtung F bewegt wird, obwohl sich die zweite Fördereinheit 28 weiter in Förderrichtung F bewegt. Es kommt folglich zum Überwinden des Reibschlusses zwischen dem Riemen 32 und der Unterseite 74 der Verpackungsschachtel 1 und somit zu einem Schlupf zwischen der zweiten Fördereinheit 28 und der Verpackungsschachtel 1. Der obere Teil der Verpackungsschachtel 1 wird hingegen so lange weiter in Förderrichtung F bewegt, bis auch ein oberer Randabschnitt 80 der voraneilenden Seitenfläche 76 an zumindest dem dritten Anschlagelement 38 anliegt. Falls ein solches vorhanden ist, liegt der obere Randabschnitt 80 dann auch am vierten Anschlagelement 40 an, dass quer zur Förderrichtung zum dritten Anschlagelement 38 versetzt angeordnet ist.

Liegen alle an das mindestens eine Anschlagelement 34, 38 angrenzenden Abschnitte 78, 80 der Verpackungsschachtel 1 am jeweiligen Anschlagelement 34, 38 an, ist die Verpackungsschachtel 1 ausgerichtet. Anschlagstellen 82, 84 der Anschlagelemente 34, 38, an denen die Verpackungsschachtel 1 zum Anliegen kommt, definieren hierzu eine Ebene E, die senkrecht zur Förderrichtung F ausgerichtet ist. Insbesondere ist die Ebene E auch senkrecht zu den Abschnitten des Riemens 30 der ersten Fördereinheit 26 und des Riemens 32 der zweiten Fördereinheit 28, die den Transportpfad 24 definieren und somit die Ausrichtung der Oberseite 72 und der Unterseite 74 der Verpackungsschachtel 1 vorgeben.

In der dargestellten bevorzugten Ausführungsform, in der die Anschlagelemente 34, 38 nockenförmig ausgebildet sind, sind die Anschlagelemente 34, 38 in der ersten Position derart angeordnet, dass die Verpackungsschachtel mit einem unteren Rand der voraneilenden Seitenfläche 76 auf das erste Anschlagelement 34 trifft und mit einem oberen Rand der voraneilenden Seitenfläche 76 auf das dritte Anschlagelement 38 trifft. Die Kontaktstellen 80, 82 sind in diesem Fall folglich linienförmig ausgebildet.

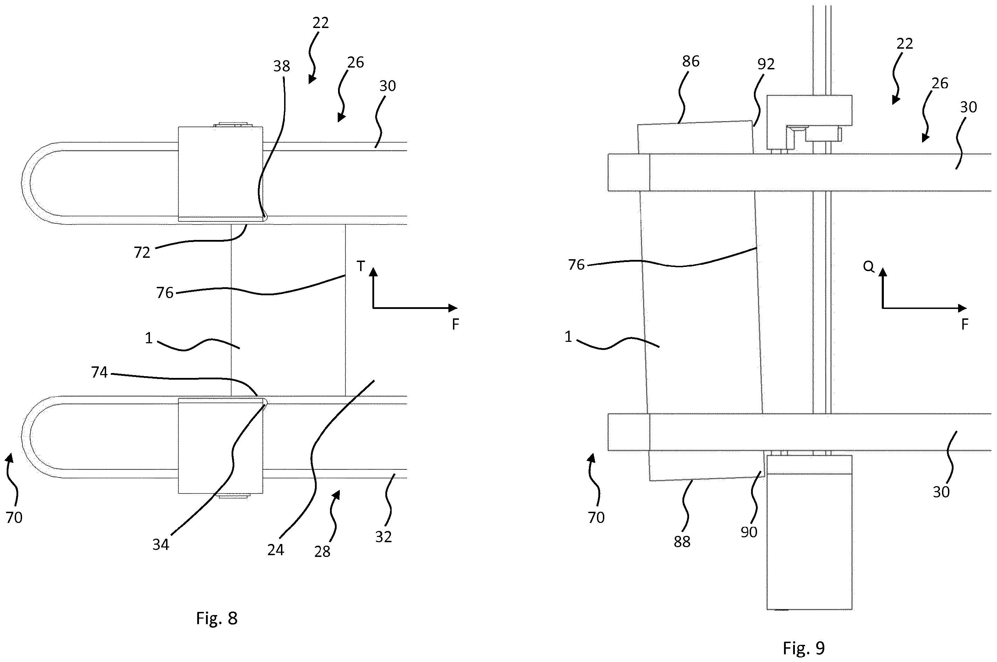

Wie aus der Zusammenschau der Fig. 7 und 8 zu erkennen ist, wird die ausgerichtete Verpackungsschachtel 1 freigegeben und durch die Fördereinrichtung 22 weiter in Förderrichtung F bewegt. Hierzu wird das mindestens eine Anschlagelement 34, 38 aus der in den Fig. 6 und 7 dargestellten ersten Position in die in Fig. 8 dargestellte zweite Position bewegt, wenn alle an das mindestens eine Anschlagelement 34, 38 angrenzenden Abschnitte 78, 80 der Verpackungsschachtel 1 an dem mindestens einen Anschlagelement 34, 38 anliegen. In der zweiten Position ragen die Anschlagelemente 34, 38 nicht mehr in den Transportpfad 24 hinein.

Insbesondere befinden sich in der zweiten Position das erste und das zweite Anschlagelement 34, 36 unterhalb einer durch den Riemen 32 definierten Förderebene und das dritte und das vierte Anschlagelement 38, 40 oberhalb einer durch den Riemen 30 definierten Förderebene. Damit nicht einzelne Anschlagelemente einen Abschnitt der Verpackungsschachtel 1 zurückhalten, während andere Anschlagelemente die Verpackungsschachtel 1 bereits freigeben, sind alle Anschlagelemente 38, 40 gleichzeitig aus der ersten Position in die zweite Position zu bewegen. Dies erfolgt vorzugsweise durch Drehen der ersten und der zweiten Welle und dadurch Schwenken der Anschlagelemente 34, 36, 38, 40 von der ersten Position in die zweite Position, wie zu vor beschrieben.

Aus den Fig. 7 und 8 ist weiterhin ersichtlich, dass das erste Anschlagelement 34 und gegebenenfalls das zweite Anschlagelement 36 im Uhrzeigersinn von der ersten Position in die zweite Position geschwenkt werden. Das dritte und gegebenenfalls das vierte Anschlagelement 38, 40 werden hingegen entgegen dem Uhrzeigersinn aus der ersten Position in die zweite Position geschwenkt. Folglich ist es erforderlich, dass das Getriebe 56 dazu eingerichtet ist, eine Drehrichtungsumkehr zwischen der ersten Welle 42 und der zweiten Welle 44 zu bewirken. Alternativ können die erste und die zweite Welle 42, 44 jeweils durch einen eigenen Antrieb gedreht werden, wobei die entsprechende Drehrichtung berücksichtigt wird.

In den Fig. 9 bis 11 ist das erfindungsgemäße Verfahren anhand einer Draufsicht dargestellt. Im Wesentlichen treffen hier die Ausführungen zu den Fig. 6 bis 8 zu, mit dem Unterschied, dass die Verpackungsschachtel 1 hier in einer Querrichtung Q schräg angeordnet ist. Die Querrichtung Q erstreckt sich in diesem Ausführungsbeispiel senkrecht zur Förderrichtung F und horizontal. Es kann entweder die gesamte Verpackungsschachtel 1 schräg angeordnet sein, d. h., dass sich die voraneilende Seitenfläche 76 zwar senkrecht zu den Seitenflächen 86, 88 der Verpackungsschachtel erstreckt, jedoch schräg zur Querrichtung Q angeordnet ist. Es ist auch denkbar, dass die Verpackungsschachtel 1 derart verzogen ist, dass die voraneilende Seitenfläche 76 der Verpackungsschachtel 1 sowohl schräg zur Querrichtung Q als auch schräg zu den Seitenflächen 86, 88 der Verpackungsschachtel ausgerichtet ist. Zusätzlich zu der in Fig. 9 dargestellten Schrägstellung kann die Verpackungsschachtel 1 auch einen Verzug aufweisen, wie er in Fig. 6 dargestellt ist.

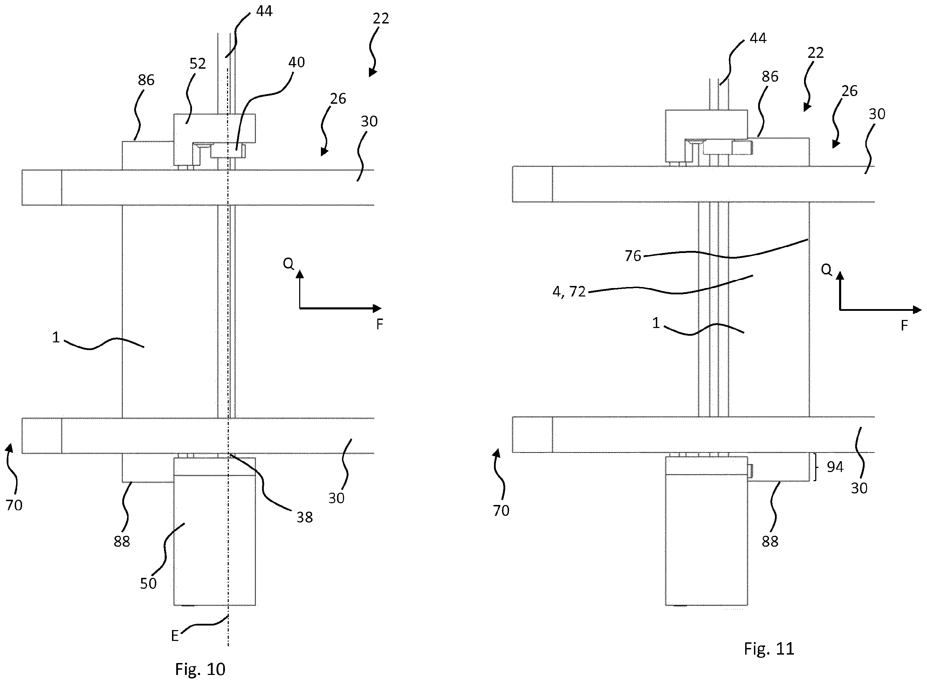

Aus den Fig. 9 und 10 ist ersichtlich, dass ein rechter Randabschnitt 90 der voraneilenden Seitenfläche 76 der Verpackungsschachtel 1 zuerst auf das dritte Anschlagelement 38 und das unterhalb desselben angeordnete erste Anschlagelement 34 trifft, die jeweils in ihrer ersten Position angeordnet sind. Der rechte Randabschnitt wird folglich durch das erste und das dritte Anschlagelement 34, 38 blockiert und trotz der andauernden Bewegung der Fördereinrichtung 22 in Förderrichtung F nicht weiter in Förderrichtung F bewegt. Es kommt zu einem Schlupf zwischen dem in Förderrichtung F betrachtet jeweils rechten Riemen der Riemen 30 und der Riemen 32. Aufgrund der fortdauernden Bewegung der Fördereinrichtung 22 in Förderrichtung F wird der linke Teil der Verpackungsschachtel 1 so lange weiter in Förderrichtung F bewegt, bis auch ein linker Randabschnitt 92 am vierten Anschlagelement 40 und dem darunter angeordneten zweiten Anschlagelement 36 anliegt, die sich ebenfalls in ihrer jeweils ersten Position befinden.

Analog zu den vorherigen Ausführungen sind auch hier Anschlagstellen zwischen den Anschlagelementen 34, 36, 38, 40 und den jeweils an diese angrenzenden Abschnitten 90, 92 der Verpackungsschachtel 1 definiert. Die Anschlagstellen definieren ebenfalls die Ebene E, sodass die voraneilende Seitenfläche 76 der Verpackungsschachtel 1 in der Ebene E angeordnet ist, wenn alle an die Anschlagelemente 34, 36, 38, 40 angrenzenden Abschnitte 90, 92 der Verpackungsschachtel 1 an den Anschlagelementen 34, 36, 38, 40 anliegen. Die Verpackungsschachtel 1 ist dann so angeordnet, dass die voraneilende Seitenfläche 76 sowohl senkrecht zur Förderrichtung F als auch senkrecht zu den Seitenflächen 86, 88 ausgerichtet ist.

Ist die Verpackungsschachtel 1 ausgerichtet, wird sie auch hier dadurch freigegeben, dass alle Anschlagelemente 34, 36, 38, 40 gleichzeitig aus der ersten Position in die jeweilige zweite Position bewegt werden, wie zuvor beschrieben. Nach der Freigabe wird die ausgerichtete Verpackungsschachtel 1 durch die Fördereinrichtung 22 weiter in Förderrichtung F bewegt, wie in Fig. 11 dargestellt ist.

In Fig. 11 ist ferner ersichtlich, dass die Fördereinrichtung 22 die Verpackungsschachtel 1 ferner derart fördert und aufnimmt, dass Bereiche der Verpackungsschachtel 1 zum Aufbringen einer Kennzeichnung 2 zugänglich sind. Beispielsweise sind die Riemen 33 der ersten Fördereinheit 26 in Querrichtung Q so weit zueinander beabstandet, dass auf die erste Seitenfläche 4, die die Oberseite 72 der Verpackungsschachtel 1 bildet, eine Kennzeichnung in Form eines Klebeetiketts, eines Aufdrucks oder eines Strichcodes aufgebracht werden kann.

Zusätzlich oder alternativ können die Riemen 30, 32 so weit beabstandet zu den Seitenflächen 86, 88 der Verpackungsschachtel 1 angeordnet sein, dass das Aufbringen eines Klebeetiketts 2, wie zu Fig. 1 beschrieben, möglich ist. Zwischen einer Seitenfläche 86, 88 und einem äußeren Rand eines Riemens 30, 32 ist dann ein Überstand 94 der Verpackungsschachtel 1 gegeben. Der Überstand 94 ist groß genug, um das Aufbringen eines ersten Abschnitts des Klebeetiketts auf die die Oberseite 72 bildende erste Seitenfläche 4 der Verpackungsschachtel 1 zu ermöglichen. Anschließend wird ein zweiter Abschnitt des Klebeetiketts 2 um die Kante 8 der Verpackungsschachtel 1 umgelegt und auf der die zweite Seitenfläche 6 bildenden Seitenfläche 88 der Verpackungsschachtel 1 angebracht.

Dem Fachmann sind aufgrund der hierin ausführlich beschriebenen Ausführungsbeispiele weitere Variationen der Vorrichtung und des erfindungsgemäßen Verfahrens ersichtlich. Insbesondere sind verschiedenste Ausführungsformen der Anschlagelemente sowie deren Anordnung und Lagerung denkbar.

## Patentansprüche

1. Verfahren zum Ausrichten von quaderförmigen Verpackungsschachteln (1) umfassend:
Fördern von Verpackungsschachteln (1) entlang eines Transportpfads (24) in einer Förderrichtung (F) mittels einer Fördereinrichtung (22), wobei die Fördereinrichtung (22) eine erste Fördereinheit (26) und eine der ersten Fördereinheit (26) gegenüberliegende zweite Fördereinheit (28) umfasst, die den Transportpfad (24) definieren, wobei die erste Fördereinheit (26) und die zweite Fördereinheit (28) jeweils mindestens einen Riemen (30, 32) umfassen, die Verpackungsschachteln (1) zwischen sich aufnehmen und gemeinsam fördern; und
Ausrichten jeweils einer Verpackungsschachtel (1) der geförderten Verpackungsschachteln (1), die einen Verzug derart aufweist, dass zumindest ein Teil der Seitenflächen der Verpackungsschachtel (1) nicht senkrecht zueinander ausgerichtet ist, mittels mindestens eines Anschlagelements (34), das im Bereich der Fördereinrichtung (22) angeordnet ist, wobei das Ausrichten einer Verpackungsschachtel (1) umfasst:
Anordnen des mindestens einen Anschlagelements (34) in einer ersten Position, in der das mindestens eine Anschlagelement (34) in den Transportpfad (24) hineinragt, wobei das mindestens eine Anschlagelement (34) in der ersten Position stationär angeordnet ist;
Fördern der Verpackungsschachtel (1) gegen das mindestens eine Anschlagelement (34), wobei sich die Fördereinrichtung (22) relativ zu dem mindestens einen Anschlagelement (34) weiter in Förderrichtung (F) bewegt und die Verpackungsschachtel (1) dadurch gegen das mindestens eine Anschlagelement (34) zwingt, bis alle an das mindestens eine Anschlagelement (34) angrenzenden Abschnitte der Verpackungsschachtel (1) an dem mindestens einen Anschlagelement (34) anliegen und die Seitenflächen der Verpackungsschachtel (1) senkrecht zueinander ausgerichtet sind, wobei mindestens eine Anschlagstelle (82, 84) des mindestens einen Anschlagelements (34), an der die Verpackungsschachtel (1) zum Anliegen kommt, eine Ebene (E) definiert, die senkrecht zur Förderrichtung (F) ausgerichtet ist;
Bewegen des mindestens einen Anschlagelements (34) aus der ersten Position in eine zweite Position, wenn alle an das mindestens eine Anschlagelement (34) angrenzenden Abschnitte der Verpackungsschachtel (1) an dem mindestens einen Anschlagelement (34) anliegen, wobei das mindestens eine Anschlagelement (34) in der zweiten Position nicht in den Transportpfad (24) hineinragt, und dadurch Freigeben der ausgerichteten Verpackungsschachtel (1) zum weiteren Transport in Förderrichtung (F).

2. Verfahren nach Anspruch 1, **gekennzeichnet durch** das Ausrichten jeweils einer Verpackungsschachtel (1) der geförderten Verpackungsschachteln (1) mittels einer Mehrzahl von Anschlagelementen (34, 36, 38, 40) und das gleichzeitige Bewegen der Mehrzahl von Anschlagelementen (34, 36, 38, 40) aus der ersten Position in die zweite Position.

3. Verfahren nach Anspruch 2, **dadurch gekennzeichnet, dass** Anschlagstellen (82, 84) der Anschlagelemente (34, 36, 38, 40), an denen die Verpackungsschachtel (1) zum Anliegen kommt, die Ebene (E) definieren, die senkrecht zur Förderrichtung (F) ausgerichtet ist.

4. Verfahren nach Anspruch 2 oder 3, **dadurch gekennzeichnet, dass** mindestens ein erstes Anschlagelement (34) und ein zweites Anschlagelement (36) der Mehrzahl von Anschlagelementen (34, 36, 38, 40) auf einer Seite des Transportpfads (24) angeordnet sind und mindestens ein drittes Anschlagelement (38) und ein viertes Anschlagelement (40) der Mehrzahl von Anschlagelementen (34, 36, 38, 40) auf einer dem ersten und dem zweiten Anschlagelement (34, 36) quer zur Förderrichtung (F) gegenüberliegenden Seite des Transportpfads (24) angeordnet sind.

5. Verfahren nach einem der vorangehenden Ansprüche, **gekennzeichnet durch** das Schwenken des mindestens einen Anschlagelements (34) um eine Schwenkachse zwischen der ersten und der zweiten Position.

6. Verfahren nach Anspruch 5, **dadurch gekennzeichnet, dass** eine Welle (42) vorgesehen ist, die sich quer zur Förderrichtung erstreckt und die Schwenkachse definiert, wobei auf der Welle (42) mindestens ein Anschlagelement (34) angeordnet ist.

7. Verfahren nach Anspruch 6, **gekennzeichnet durch** das Antreiben der Welle (42) mittels eines Antriebs (54), wobei der Antrieb (54) vorzugsweise als Servomotor, Drehmagnet, als pneumatischer oder als mechanischer Antrieb ausgebildet ist.

8. Verfahren nach einem der vorangehenden Ansprüche, **gekennzeichnet durch** das synchrone, kontinuierliche Antreiben der ersten und der zweiten Fördereinheit (26, 28).

9. Verfahren nach einem der vorangehenden Ansprüche, **dadurch gekennzeichnet, dass** die erste Fördereinheit (26) und die zweite Fördereinheit (28) die Verpackungsschachteln (1) reibschlüssig zwischen sich aufnehmen.

10. Verfahren nach einem der vorangehenden Ansprüche, **dadurch gekennzeichnet, dass** die Fördereinrichtung (22) die Verpackungsschachteln (1) mit einer Geschwindigkeit von mindestens 6 m/min, vorzugsweise von mindestens 30 m/min und mehr bevorzugt von mindestens 60 m/min fördert.

11. Verfahren nach einem der vorangehenden Ansprüche, **gekennzeichnet durch** das Aufbringen einer Kennzeichnung (2) auf eine Verpackungsschachtel (1) nach dem Ausrichten der Verpackungsschachtel (1).

12. Verfahren nach Anspruch 11, **dadurch gekennzeichnet, dass** die Kennzeichnung (2) ein Klebeetikett ist, das derart aufgebracht wird, dass es sich von einer ersten Seitenfläche (4) der Verpackungsschachtel (1) über eine Kante (8) der Verpackungsschachtel (1) auf eine zweite Seitenfläche (6) der Verpackungsschachtel (1) erstreckt.

13. Verfahren nach einem der vorangehenden Ansprüche, **dadurch gekennzeichnet, dass**
das Anordnen des mindestens einen Anschlagelements (34) in der ersten Position umfasst:
das Erfassen einer sich dem mindestens einen Anschlagelement (34) nähernden Verpackungsschachtel (1) mittels eines Sensors (55);
das Senden eines Signals an eine Steuereinrichtung, wenn der Sensor (55) eine Verpackungsschachtel (1) erfasst; und
das Veranlassen des Bewegens des mindestens einen Anschlagelements (34) in die erste Position mittels der Steuereinrichtung, wenn die Steuereinrichtung das Signal empfangen hat; und dass
das Bewegen des mindestens einen Anschlagelements (34) aus der ersten Position in die zweite Position durch die Steuereinrichtung veranlasst wird, sobald ein vorbestimmter Grenzwert erreicht ist.

## Claims

1. A method for aligning rectangular packaging boxes (1) comprising the steps of:
conveying packaging boxes (1) along a transport path (24) in a conveying direction (F) by means of a conveying device (22), wherein the conveying device (22) comprises a first conveying unit (26) and a second conveying unit (28) opposite the first conveying unit (26), the first conveying unit (26) and the second conveying unit (28) defining the transport path (24), wherein the first conveying unit (26) and the second conveying unit (28) each comprise at least one belt (30, 32) receiving and jointly conveying the packaging boxes (1) between them; and
aligning each packaging box (1) of the conveyed packaging boxes (1), which comprise a distortion in a way that at least some side surfaces of the packaging box (1) are not oriented perpendicularly to each other, by means of at least one stop element (34) arranged in the area of the conveying device (22), wherein aligning each packaging box (1) comprises:
arranging the at least one stop element (34) in a first position, in which the at least one stop element (34) projects into the transport path (24), wherein the at least one stop element (34) is arranged stationarily in the first position;
conveying the packaging box (1) against the at least one stop element (34), wherein the conveying device (22) continues to move in the conveying direction (F) relative to the at least one stop element (34) and thus forces the packaging box (1) against the at least one stop element (34), until each section of the packaging box (1) facing the at least one stop element (34) rests against the at least one stop element (34) and the side surfaces of the packaging box (1) are oriented perpendicularly to each other, wherein at least one stop site (82, 84) of the at least one stop element (34) against which the packaging box (1) comes to rest defines a plane (E) which is oriented perpendicularly to the conveying direction (F);
moving the at least one stop element (34) out of the first position and into a second position when each section of the packaging box (1) facing the at least one stop element (34) rests against the at least one stop element (34), wherein the at least one stop element (34), when in the second position, does not project into the transport path (24), and thus releasing the aligned packaging box (1) for further transport in the conveying direction (F).

2. The method according to claim 1, **characterized by** aligning each packaging box (1) of the conveyed packaging boxes (1) by means of a plurality of stop elements (34, 36, 38, 40) and by simultaneously moving the plurality of stop elements (34, 36, 38, 40) out of the first position and into the second position.

3. The method according to claim 2, **characterized in that** stop sites (82, 84) of the stop elements (34, 36, 38, 40) against which each packaging box (1) comes to rest define the plane (E) oriented perpendicularly to the conveying direction (F).

4. The method according to claim 2 or 3, **characterized in that** at least a first stop element (34) and a second stop element (36) of the plurality of stop elements (34, 36, 38, 40) are arranged on one side of the transport path (24), and at least a third stop element (38) and a fourth stop element (40) of the plurality of stop elements (34, 36, 38, 40) are arranged on a side of the transport path (24) opposite the first and second stop elements (34, 36) in a direction transversely to the conveying direction (F).

5. The method according to any of the preceding claims, **characterized by** pivoting the at least one stop element (34) around a pivot axis between the first position and the second position.

6. The method according to claim 5, **characterized in that** a shaft (42) is provided, which extends transversely to the conveying direction (F) and defines the pivot axis, wherein at least one stop element (34) is arranged on the shaft (42).

7. The method according to claim 6, **characterized by** driving the shaft (42) by means of a drive (54), wherein the drive (54) preferably is a servo motor, a rotating magnet, a pneumatic drive or a mechanical drive.

8. The method according to any of the preceding claims, **characterized by** synchronous and continuous driving of the first and second conveying units (26, 28).

9. The method according to any of the preceding claims, **characterized in that** the first conveying unit (26) and the second conveying unit (28) hold the packaging boxes (1) between them by frictional contact.

10. The method according to any of the preceding claims, **characterized in that** the conveying device (22) conveys the packaging boxes (1) at a speed of at least 6 m/min, preferably at least 30 m/min, and more preferably at least 60 m/min.

11. The method according to any of the preceding claims, **characterized by** applying an identifier (2) to a packaging box (1) after the packaging box (1) has been aligned.

12. The method according to claim 11, **characterized in that** the identifier (2) is an adhesive label, which is applied in such a way that it extends from a first side surface (4) of the packaging box (1) around an edge (8) of the packaging box (1) and onto a second side surface (6) of the packaging box (1).

13. The method according to any of the preceding claims, **characterized in that** arranging the at least one stop element (34) in the first position comprises:
detecting a packaging box (1) approaching the at least one stop element (34) by means of a sensor (55);
transmitting a signal to a control unit when the sensor (55) detects an approaching packaging box (1); and
initiating the movement of the at least one stop element (34) into the first position by means of the control unit when the control unit has received the signal; and **in that**
moving the at least one stop element (34) from the first position into the second position is initiated by the control unit as soon as a predetermined threshold is reached.

## Revendications

1. Procédé pour aligner des boîtes d'emballage (1) de forme parallélépipédiques, comprenant :
le fait de transporter des boîtes d'emballage (1) le long d'un chemin de transport (24) dans une direction de transport (F) au moyen d'un dispositif de transport (22), le dispositif de transport (22) comprenant une première unité de transport (26) et une deuxième unité de transport (28) opposée à la première unité de transport (26), qui définissent le chemin de transport (24), la première unité de transport (26) et la deuxième unité de transport (28) comprenant chacune au moins une courroie (30, 32) qui reçoivent entre elles des boîtes d'emballage (1) et les transportent ensemble ; et
le fait d'aligner une boîte d'emballage (1) respective parmi les boîtes d'emballage (1) transportées, qui présente une déformation telle qu'au moins une partie des surfaces latérales de la boîte d'emballage (1) ne sont pas orientées perpendiculairement l'une à l'autre, au moyen d'au moins un élément de butée (34) qui est agencé dans la zone du dispositif de transport (22), l'orientation d'une boîte d'emballage (1) comprenant :
le fait de disposer ledit au moins un élément de butée (34) dans une première position dans laquelle ledit au moins un élément de butée (34) fait saillie dans le chemin de transport (24), ledit au moins un élément de butée (34) étant agencé de manière stationnaire dans la première position ;
le fait de transporter la boîte d'emballage (1) contre ledit au moins un élément de butée (34), le dispositif de transport (22) continuant à se déplacer par rapport audit au moins un élément de butée (34) dans la direction de transport (F) et forçant ainsi la boîte d'emballage (1) contre ledit au moins un élément de butée (34), jusqu'à ce que toutes les sections de la boîte d'emballage (1) adjacentes audit au moins un élément de butée (34) soient en appui contre ledit au moins un élément de butée (34) et que les surfaces latérales de la boîte d'emballage (1) soient orientées perpendiculairement les unes aux autres, au moins un point de butée (82, 84) dudit au moins un élément de butée (34), contre lequel la boîte d'emballage (1) vient en appui, définissant un plan (E) qui est orienté perpendiculairement à la direction de transport (F) ;
le fait de déplacer ledit au moins un élément de butée (34) de la première position à une deuxième position lorsque toutes les parties de la boîte d'emballage (1) adjacentes audit au moins un élément de butée (34) sont en butée contre ledit au moins un élément de butée (34), ledit au moins un élément de butée (34) ne faisant pas saillie dans le chemin de transport (24) dans la deuxième position, libérant ainsi la boîte d'emballage (1) alignée pour la poursuite du transport dans la direction de transport (F).

2. Procédé selon la revendication 1, **caractérisé par** le fait d'aligner une boîte d'emballage (1) respective parmi les boîtes d'emballage (1) transportées au moyen d'une pluralité d'éléments de butée (34, 36, 38, 40) et de déplacer simultanément la pluralité d'éléments de butée (34, 36, 38, 40) de la première position à la deuxième position.

3. Procédé selon la revendication 2, **caractérisé en ce que** des points de butée (82, 84) des éléments de butée (34, 36, 38, 40), contre lesquels la boîte d'emballage (1) vient en appui, définissent le plan (E) qui est orienté perpendiculairement à la direction de transport (F).

4. Procédé selon la revendication 2 ou la revendication 3, **caractérisé en ce qu'**au moins un premier élément de butée (34) et un deuxième élément de butée (36) de la pluralité d'éléments de butée (34, 36, 38, 40) sont agencés sur un côté du chemin de transport (24) et au moins un troisième élément de butée (38) et un quatrième élément de butée (40) de la pluralité d'éléments de butée (34, 36, 38, 40) sont agencés sur un côté du chemin de transport (24) opposé au premier et au deuxième élément de butée (34, 36) transversalement à la direction de transport (F).

5. Procédé selon l'une des revendications précédentes, **caractérisé par** le fait de faire pivoter ledit au moins un élément de butée (34) autour d'un axe de pivotement entre ladite première et ladite deuxième position.

6. Procédé selon la revendication 5, **caractérisé en ce qu'**il est prévu un arbre (42) qui s'étend transversalement à la direction de transport et qui définit l'axe de pivotement, au moins un élément de butée (34) étant agencé sur l'arbre (42).

7. Procédé selon la revendication 6, **caractérisé par** le fait d'entraîner l'arbre (42) au moyen d'un système d'entraînement (54), le système d'entraînement (54) étant de préférence conçu sous la forme d'un servomoteur, un aimant rotatif, un système d'entraînement pneumatique ou un système d'entraînement mécanique.

8. Procédé selon l'une des revendications précédentes, **caractérisé par** le fait d'entraîner de manière synchrone et continue la première et la deuxième unité de transport (26, 28).

9. Procédé selon l'une des revendications précédentes, **caractérisé en ce que** la première unité de transport (26) et la deuxième unité de transport (28) reçoivent entre elles les boîtes d'emballage (1) par friction.

10. Procédé selon l'une des revendications précédentes, **caractérisé en ce que** le dispositif de transport (22) transporte les boîtes d'emballage (1) à une vitesse d'au moins 6m/min, de préférence d'au moins 30m/min et de façon encore préférée d'au moins 60m/min.

11. Procédé selon l'une des revendications précédentes, **caractérisé par** le fait d'appliquer un marquage (2) sur une boîte d'emballage (1) après alignement de la boîte d'emballage (1).

12. Procédé selon la revendication 11, **caractérisé en ce que** le marquage (2) est une étiquette adhésive appliquée de manière à s'étendre d'une première face latérale (4) de la boîte d'emballage (1) à une deuxième face latérale (6) de la boîte d'emballage (1) en passant par un bord (8) de la boîte d'emballage (1).

13. Procédé selon l'une des revendications précédentes, **caractérisé en ce que**
le placement dudit au moins un élément de butée (34) dans ladite première position comprend :
le fait de détecter, au moyen d'un capteur (55), une boîte d'emballage (1) s'approchant dudit au moins un élément de butée (34) ;
le fait d'envoyer un signal à un dispositif de commande lorsque le capteur (55) détecte une boîte d'emballage (1) ; et
le fait de déclencher le déplacement dudit au moins un élément de butée (34) dans la première position au moyen du dispositif de commande, lorsque le dispositif de commande a reçu le signal ; et **en ce que**
le déplacement dudit au moins un élément de butée (34) de la première position à la deuxième position est provoqué par le dispositif de commande dès qu'une valeur limite prédéterminée est atteinte.
